(19) Europäisches Patentamt
European Patent Office
Office européen des brevets

(11) **EP 3 905 263 A1**

(12) **EUROPEAN PATENT APPLICATION**
published in accordance with Art. 153(4) EPC

(43) Date of publication:
**03.11.2021 Bulletin 2021/44**

(21) Application number: **18942701.6**

(22) Date of filing: **11.12.2018**

(51) Int Cl.:
$G21C\ 17/10^{(2006.01)}$     $G21C\ 17/00^{(2006.01)}$
$G21D\ 3/06^{(2006.01)}$

(86) International application number:
**PCT/CN2018/120393**

(87) International publication number:
**WO 2020/118533 (18.06.2020 Gazette 2020/25)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **China Nuclear Power Engineering Co., Ltd.**
**Shenzhen, Guangdong 518124 (CN)**
• **China General Nuclear Power Group**
**Shenzhen, Guangdong 518031 (CN)**
• **CGN Power Co., Ltd.**
**Shenzhen, Guangdong 518031 (CN)**

(72) Inventors:
• **ZHOU, Xin jian**
**Shenzhen City, Guangdong 518124 (CN)**
• **WEN, Xiao mei**
**Shenzhen City, Guangdong 518124 (CN)**
• **LING, Jun**
**Shenzhen City, Guangdong 518124 (CN)**
• **TIAN, Ya jie**
**Shenzhen City, Guangdong 518124 (CN)**

(74) Representative: **Greaves Brewster LLP**
**Copa House**
**Station Road**
**Cheddar, Somerset BS27 3AH (GB)**

(54) **NUCLEAR POWER PLANT LEAKAGE MONITORING ALARM METHOD AND ALARM SYSTEM**

(57) The present invention provides a nuclear power plant leakage monitoring alarm method, including: acquiring a unit operating condition signal and determining leakage monitoring availability based on the unit operating condition signal; acquiring a process system state signal and leakage monitoring instrument data, and determining reliability of leakage monitoring data if the leakage monitoring is in an available state; implementing leakage source positioning analysis and leakage source quantitative calculation if the leakage monitoring data is in a reliable state; and triggering a leakage alarm if the diagnostic results of the leakage source positioning analysis and the leakage rate quantitative calculation both indicate occurrence of leakage and leakage response characteristics are met. The present invention also provides a nuclear power plant leakage monitoring alarm system. The present invention can effectively increase the accuracy of leakage monitoring and reduce operator intervention, thereby reducing human factor faults and increasing the level of automation of leakage monitoring.

Fig. 1

**Description**

**FIELD OF THE INVENTION**

The present invention generally relates to nuclear power plants and, more particularly, relates to a nuclear power plant leakage monitoring alarm method and alarm system.

**BACKGROUND OF THE INVENTION**

Leakage of the reactor coolant pressure boundary of a nuclear power plant directly affects the safe operation of the nuclear power plant. The leakage of the application objects of the leak-before-break technology directly affects the operation economical efficiency of the nuclear power plant. The leakage monitoring system monitors the unrecognizable leakage of the p reactor coolant pressure boundary and the leakage of the application objects of the leak-before-break technology.

At present, the commonly used leakage monitoring method is realized via alarming by a single monitoring instrument exceeding a threshold value. Due to the alarm, the operators of the nuclear power plant verify whether a leakage has occurred according to operating experience or operating technical specifications.

However, the operating environment and structure of nuclear power plants are relatively complex, and the conventional alarm method may easily cause false alarms, resulting in low accuracy of leakage monitoring. At the same time, after the alarm, the operators of the nuclear power plant will verify whether leakage occurs, which not only leads to lower automatic leakage monitoring capabilities, but also increases the workload of operators and increases labor costs. In addition, manual verification tests the technical capabilities of operators. If operators are inexperienced, it is likely to cause leakage misjudgment and human-caused failure risks, which cannot effectively improve the accuracy of leakage monitoring but cause decreased economic efficiency of nuclear power plants.

In view of the foregoing, what is needed, therefore, is to provide a technical solution to solve the technical problems as previously discussed.

**SUMMARY OF THE INVENTION**

One object of the present invention is to provide a nuclear power plant leakage monitoring alarm method and alarm system, which can solve the problem of low accuracy of leakage monitoring and diagnosis as well as low level of automation in the prior art.

According to one embodiment of the present invention, a nuclear power plant leakage monitoring alarm method includes the steps of:

acquiring a unit operating condition signal, and determining availability of leakage monitoring data according to the unit operating condition signal;

acquiring process system state signals and leakage monitoring instrument data if the leakage monitoring data is in an available state;

judging whether the process system has a fault according to the process system state signal, and obtaining operating state of the process system;

judging whether leakage monitoring instrument and the system has a fault according to the leakage monitoring instrument data, monitoring channel self-check and system fault self-diagnosis, and obtaining comprehensive state of the leakage monitoring instrument and the system;

determine reliability of the leakage monitoring data according to the operating state and the comprehensive state;

implementing leakage source positioning analysis to determine the location of the leakage source if the leakage monitoring data is reliable, and implementing a leakage rate quantitative calculation according to the location of the leakage source; and

triggering a leakage alarm if analysis result of the leakage source positioning analysis and calculation result of the leakage rate quantitative calculation indicate occurrence of the leakage and leakage response characteristic is satisfied.

According to aonther embodiment of the present invention, a nuclear power plant leakage monitoring alarm system includes:

a data availability diagnosis module, configured to acquire a unit operating condition signal, and determine availability of leakage monitoring data according to the unit operating condition signal;

a signal and data acquisition module, configured to acquire a process system state signal and leakage monitoring instrument data if the leakage monitoring data is in an available state;

an operating state determination module, configured to determine whether the process system has a fault according to the process system state signal, and obtain operating state of the process system;

a comprehensive state determination module, configured to determine whether the leakage monitoring instrument and system has a fault according to the leakage monitoring instrument data, monitoring channel self-check and system fault self-diagnosis and obtain comprehensive state of the leakage monitoring instrument and system;

a data reliability determination module, configured to determine reliability of the leakage monitoring data according to the operating state and the comprehensive state;

a leakage detection module, configured to implement leakage source positioning analysis if the leakage detection data is reliable, to determine the leakage source location and implement leakage rate quantitative calculation according to the leakage source location; and

a leakage comprehensive diagnosis and alarm module, configured to trigger a leakage alarm if the analysis result of the leakage source positioning analysis and the calculation result of the leakage rate quantitative calculation indicate occurrence of leakage and the leakage response characteristics are met.

The nuclear power plant leakage monitoring alarm method and alarm system of the present invention can realize comprehensive diagnosis and alarm of leakage via judgement of the unit operating condition, diagnosis of the process system fault, judgement of instrument system fault, diagnosis of leakage source positioning and leakage source quantitative calculation, which can effectively increase the accuracy of leakage monitoring and reduce operator intervention, thereby reducing human factor faults and increasing the level of automation of leakage monitoring.

## BRIEF DESCRIPTION OF THE DRAWINGS

The nuclear power plant leakage monitoring alarm method and alarm system of the present invention will now be described in detail below with reference to the accompanying drawings, in which:

Fig.1 is an implementation flowchart of a nuclear power plant leakage monitoring alarm method according to one embodiment of the present invention;

Fig. 2 is an implementation flowchart of step S3 in the nuclear power plant leakage monitoring alarm method according to one embodiment of the present invention;

Fig. 3 is an implementation flowchart of step S10 in the nuclear power plant leakage monitoring alarm method according to one embodiment of the present invention;

Fig. 4 is an implementation flowchart of step S4 in the nuclear power plant leakage monitoring alarm method according to one embodiment of the present invention;

Fig. 5 is an implementation flowchart of step S4 in the nuclear power plant leakage monitoring alarm method according to one embodiment of the present invention;

Fig. 6 is a implementation flowchart showing implementing leakage source positioning analysis and leakage source quantitative calculation in step S6 in the nuclear power plant leakage monitoring alarm method according to one embodiment of the present invention;

Fig. 7 is a implementation flowchart showing implementing leakage rate quantitative calculation according to the leakage source position in step S6 in the nuclear power plant leakage monitoring alarm method according to one embodiment of the present invention, wherein the leakage source position is reactor coolant pressure boundary;

Fig. 8 is an implementation flowchart showing implementing leakage rate quantitative calculation according to the leakage source position in step S6 in the nuclear power plant leakage monitoring alarm method according to one embodiment of the present invention, wherein the leakage source position is a main steam pipeline;

Fig. 9 is a schematic diagram of a nuclear power plant leakage monitoring alarm system according to one embodiment of the present invention; and

Fig. 10 is a schematic diagram of a computer device according to one embodiment of the present invention.

## DETAILED DESCRIPTION OF THE INVENTION

In order to make the objective, technical solutions and technical effects of the present invention clearer, the present invention will be further described in detail below in conjunction with the accompanying drawings and embodiments. It should be understood that the embodiments described herein are only for explaining the present invention, not for limiting the scope of the present invention.

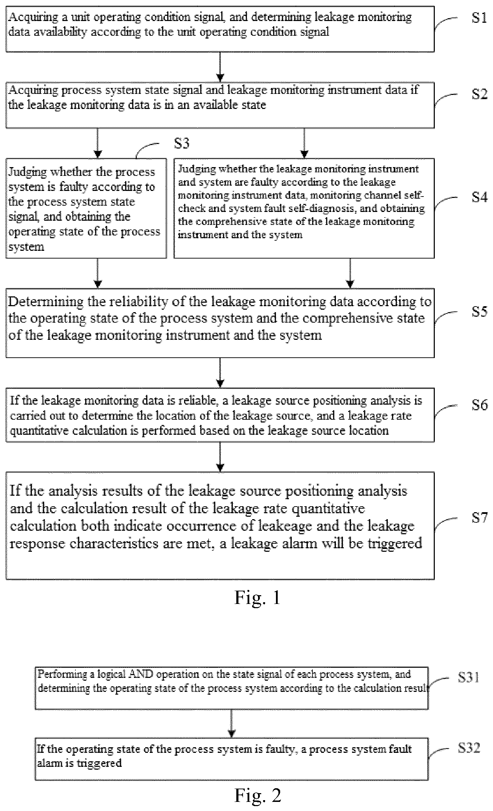

Fig.1 shows an implementation process of a nuclear power plant leakage monitoring alarm method according to one embodiment of the present invention, including steps S1 to S7. The execution body of the embodiment according to the present invention may be server device (such as computer) configured for performing nuclear power plant leakage monitoring and comprehensive diagnosis.

S1: acquiring a unit operating condition signal, and determining leakage monitoring data availability according to the unit operating condition signal.

Specifically, the unit operating condition signal $R_i$ of the nuclear power plant unit is acquired in real time, or is acquired by acquiring operating parameters, such as power $P$, temperature $T$ and pressure $p$ , and logically calculating the operating parameters to obtain the operating condition signal $R_i$, and the availability of the leakage monitoring data is judged according to the unit operating condition signal $R_i$.

The operating condition signal may be the operating state signal of the nuclear power plant, including normal operating conditions and anticipated events. The normal operating conditions may include several operating modes.

The availability of the leakage monitoring data includes available state and unavailable state, which are used to identify whether the leakage monitoring data is available. When the availability of the leakage monitoring data is in an available state, the leakage monitoring and comprehensive diagnosis system operats normally, to monitor and diagnose the leakage. When the availability of the leakage monitoring data is in an unavailable state, the leakage monitoring and comprehensive diagnosis system data is not transmitted, and the fault alarm and the leakage alarm are suppressed, so as not to cause interference to the operator.

Alarm suppression is a method of processing alarm information. For example, under certain conditions, although the media parameter reaches an alarm threshold, it is not an abnormal phenomenon. It is only a measure to block the alarm in order not to affect the normal monitoring.

S2: acquiring process system state signal and leakage monitoring instrument data if the leakage monitoring data is in an available state.

Specifically, if the leakage monitoring data acquired according to step S1 is in an available state, the process system state signal and the leakage monitoring instrument data are acquired.

The process system refers to a process system on which the leakage monitoring instruments depend. The process system includes but not limited to the containment ventilation system and equipment cooling system thereof, and the nuclear island drain exhaust system.

According to one embodiment of the present invention, acquiring process system state signal includes: Comparing the air volume, the temperature and the pressure of the ventilation system in each process system with a preset air volume threshold, preset temperature threshold and preset pressure threshold respectively, and determining the state signal of each process system according to the comparison result.

Specifically, the state parameters of each process system acquired includes but not limited to, the air volume $Q_i$, temperature $T_i$ and pressure $p_i$ of the ventilation system. The process system state signal is determined according to the process system state parameters. The specific logical operation formula is $S_i = Q_i \leq Q_{i0}$ & $T_i \leq T_{i0}$ & $p_i \leq p_{i0}$, wherein $Q_{i0}$ is a preset air volume threshold, $T_{i0}$ is a preset temperature threshold and $P_{i0}$ is a preset pressure threshold.

The value of the process system state signal $S_i$ is 1 or 0. $S_i$ =1 means the $i$ th process system is normal. $S_i$ = 0 means the $i$ th process system is faulty.

S3: judging whether the process system is faulty according to the process system state signal, and obtaining the operating state of the process system.

Specifically, whether the process system is faulty is determined according to the process system state signal acquired in step S2. If the process system is determined to be faulty according to the process system state signal, the operating state of the process system is determined as faulty. If there is no fault in the process system according to the process system state signal, the operating state of the process system is determined as normal.

Further, as shown in Fig. 2, according to one embodiment of the present invention, judging whether the process system is faulty according to the process system state signal, and obtaining the operating state of the process system includes:

S31: performing a logical AND operation on the state signal of each process system, and determining the operating state of the process system according to the calculation result.

Specifically, according to the state signal $S_i$ of each process system acquired in step S2, judging whether the process system is faulty. The specific logical operation formula is $S = S_1 \& S_2 \& ...\& Sn$, wherein $S$ is the operating state of the process system, $S_i$ is the state signal of the $i$th process system, $i \in [1,n]$ and n is the number of the process system.

If the operating state $S$ of the process system is 0, the operating state of the process system is determined as faulty.

If the operating status $S$ of the process system is 1, the operating state of the process system is determined as normal.

S32: If the operating state of the process system is faulty, a process system fault alarm is triggered. Specifically, if the operating state of the process system $S$ obtained in step S31 is 0, the operating state of the process system is fault and a process system failure alarm is triggered.

S4: judging whether the leakage monitoring instrument and system are faulty according to the leakage monitoring instrument data, monitoring channel self-check and system fault self-diagnosis, and obtaining the comprehensive state of the leakage monitoring instrument and the system.

Specifically, judging whether the leakage monitoring instrument and the system are fault by performing logical operations on the diagnostic leakage monitoring instrument data, the monitoring channel self-check result, and the system fault self-diagnostic result, and obtaining the comprehensive state of the leakage monitoring instrument and the system.

S5: determining the reliability of the leakage monitoring data according to the operating state of the process system and the comprehensive state of the leakage monitoring instrument and the system.

Specifically, the operating state $S$ of the process system obtained in step S3 and the comprehensive state $D$ of the leakage monitoring instrument and the system obtained in step S4 are logically calculated to diagnose the reliability of the leakage monitoring data. The specific logic formula is $\varepsilon = S \& D$, wherein $\varepsilon$ is the reliability of the leakage monitoring data. If $\varepsilon$ is 0, the leakage monitoring data is determined as unreliable, that is, the reliability is in a faulty state; if $\varepsilon$ is 1, the leakage monitoring data is determined as reliable, that is, the reliability is in a normal state.

The reliability of the leakage monitoring data includes normal state and faulty state, which are used to identify whether the leakage monitoring data is reliable. When the leakage monitoring data is in a normal state, the leakage monitoring value is credible, and the subsequent leakage source positioning analysis and leakage rate quantitative calculation are carried out in real time. When the leakage monitoring data is in a faulty state, the leakage monitoring value is not credible, a fault alarm is triggered, and the monitoring value is maintained as the last normal value, in order to avoid misjudgment by the operator due to distortion of the monitoring value.

S6: If the leakage monitoring data is reliable, leakage source positioning analysis is carried out to determine the location of the leakage source, and a leakage rate quantitative calculation is performed based on the location of the leakage source.

Specifically, if the reliability of the leakage monitoring data obtained according to step S5 is in a normal state, the leakage source positioning analysis and the leakage rate quantitative calculation are further performed.

The leakage source positioning analysis includes monitoring whether the change range $\delta_{H_n}$ and $\delta_{T_n}$ of a single instrument exceeds the alarm threshold, as well as diagnosing the consistency of the leakage source positioning analysis results. When the analysis result of the leakage source location analysis indicates occurrence of leakage at a certain location, the leakage source location alarm $L_l$ is triggered.

The leakage rate quantitative calculation includes judging whether the leakage gas quantitative alarm $L_{gas}$, the leakage liquid quantitative alarm $L_{liquid}$ and the total leakage rate quantitative alarm $L_{total}$ exceed an alarm threshold, and diagnosing the consistency of the leakage rate quantitative calculation results $L_q = L_{gas} \& L_{liquid} + L_{gas} \& L_{total} + L_{total} \& L_{liquid}$. When the calculation result of the leakage rate quantitative calculation indicates the occurrence of leakage, the leakage quantitative alarm $L_q$ is triggered.

It should be noted that, the location of the leakage source includes the reactor coolant pressure boundary (RCPB) or the main steam pipeline, and the leakage generated at the reactor coolant pressure boundary location includes leakage gas and leakage liquid. The leakage generated in location of the main steam pipeline only includes the leakage gas. Therefore, the leakage rate quantitative calculation of the main steam pipeline only includes the quantitative alarm of the leaking gas $L_{gas}$, ie $L_q = L_{gas}$.

S7: If the analysis results of the leakage source positioning analysis and the calculation result of the leakage rate quantitative calculation both indicate occurrence of leakeage and the leakage response characteristics are met, a leakage alarm will be triggered.

Specifically, if the analysis result of the leakage source positioning analysis and the calculation result of the leakage rate quantitative calculation obtained in step S6 both indicate occurrence of leakeage, the consistency $L_c$ and timing $L_t$ of the leakage location alarm $L_l$ and the leak quantitative alarm $L_q$ are further judged, and the comprehensive leakage diagnosis results $L_F$ is obtained according to the consistency and the timing.

If the result of the comprehensive leakage diagnosis $L_F$ is 1, a leakage is determined and a leakage alarm is triggered.

According to another embodiment of the present invention, the nuclear power plant leakage monitoring alarm method may further include steps S8 to S10, which will be described in detail as following.

S8: Outputting the leakage alarm prompt information including the leakage rate change curve and the information of the leakage source location, so that the operator can carry out periodic leakage rate tests based on the leakage alarm prompt information.

Specifically, according to the leakage rate change curve and leakage source location information in the process of leakage source positioning analysis and leakage rate quantitative calculation, the leakage alarm prompt information including the leakage rate occurrence curve and the leakage source location information is output to a monitoring platform.

The leakage rate change curve is used to display the change of the leakage rate in unit time, and the leakage source location information is used to identify the specific location where the leakage occurs.

Further, when the analysis result of the leakage source positioning analysis indicates occurrence of leakage, a leakage location alarm can be performed in the system. When the calculation result of the leakage rate quantitative calculation indicates occurrence of leakage, a quantitative leakage alarm can be performed in the system.

It should be noted that, only when the analysis result of the leakage source positioning analysis and the calculation result of the leakage rate quantitative calculation both indicate occurrence of leakage, the leakage is confirmed and the system sends a leakage alarm to the outside.

Further, if only the analysis result of the leakage source positioning analysis indicates occurrence of leakage, while the diagnosis result of the leakage rate quantitative calculation indicates no leakage occurred, that is, there is only a leakage source location alarm, but no leakage quantitative alarm, it may be a false alarm caused by leakage source location monitoring instrument failures or unreasonable positioning alarm threshold settings. Therefore, this situation is judged as non-leakage, the display value is confirmed to be invalid, and the alarm is suppressed.

If only the calculation result of the leakage rate quantitative calculation indicates occurrence of leakage, while the analysis result of the leakage source positioning analysis indicates no leakage, that is, there is only a leakage quantitative alarm, but no leakage source location alarm. In this case, other drains cause the leakage rate of the pit conversion of the nuclear island drain exhaust system to exceed the quantitative alarm threshold, or the cooling water of the ventilation system equipment is abnormally drained, which causes the condensate flow and the pit conversion leakage rate of the nuclear island drain exhaust system to exceed the quantitative alarm threshold. Therefore, this situation is determined as non-leakage, the displayed value is confirmed as invalid and the alarm suppression is performed.

If the leakage monitoring system is in a leakage alarm state, and the location of the leakage source is determined as the reactor coolant pressure boundary, the operator is reminded to carry out periodic leakage rate tests.

Specifically, when a leakage alarm is triggered, it is verified that the location of the leakage source is the reactor coolant pressure boundary, and the leakage alarm prompt information also includes content to remind the operator to carry out periodic leakage rate tests as soon as possible. The operator judges whether the unit operating parameters is a prerequisite for the periodic leakage rate test. If the prerequisites are met, the periodic leakage rate test is carried out in advance according to the test procedure. Whether to take corrective measures is determined based on the test results and the unit operating technical specifications.

The technical specifications for unit operation and the periodic leakage rate test procedure are necessary documents for pressurized water reactor nuclear power plants, and the prerequisites are stipulated in the periodic leakage rate test procedure. Under normal circumstances, the periodic leakage rate test is carried out once a day according to the requirements of the operation manual. The leakage monitoring system provides a cut-in method for the selection of the timing of the periodic leakage rate test.

S9: If the operator initiates the periodic leakage rate test is detected, the predictive data of the periodic leakage rate test is calculated, and after the periodic leakage rate test is finished, the actual data of the periodic leakage rate test manually calculated by the operator is obtained.

Specifically, if the operator initiates the periodic leakage rate test is detected, the predictive data is automatically calculated during the process of the periodic leakage rate test, and the actual data manually calculated by the operator is obtained after the periodic leakage rate test is finished.

Further, the predictive data may specifically include an automatically calculated unrecognizable leakage rate

$L_{nq}$, the actual data may specifically include a manually calculated unrecognizable leakage rate $L_{nq}^{'}$, and the actual data may also include total leakage, recognizable leakage, and so on.

S10: correcting the leakage gas diffusion loss coefficient by comparing the predictive data with the actual data.

Specifically, according to the predictive data and actual data obtained in step S9, the predictive data is compared with the actual data. According to the comparison result, it is determined whether the automatic calculation of the system is used to replace the manual calculation of the operator, and to correct the leakage gas diffusion loss coefficient according to the deviation and the correction step length.

Further, the leakage gas diffusion loss coefficient includes the loss rate in the gas diffusion process and the gas mass ratio at the location of the leakage source.

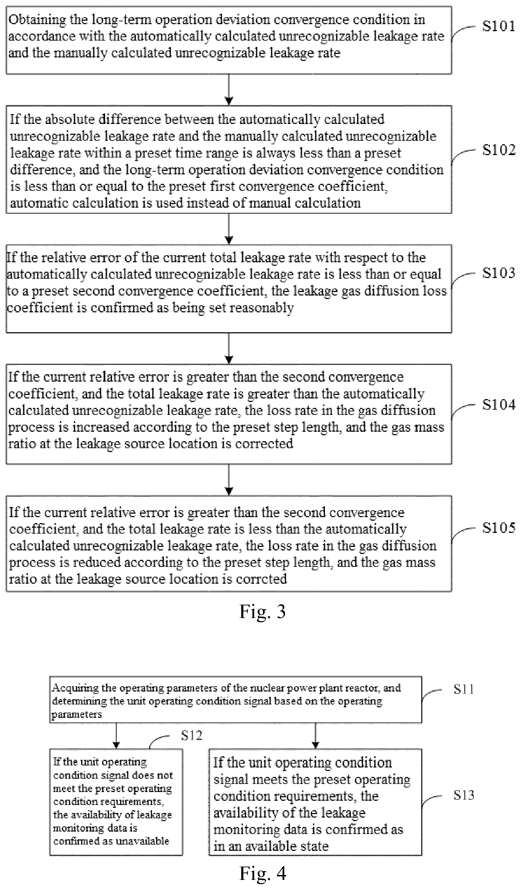

Preferably, according to one embodiment of the present invention, as shown in Fig. 3, by comparing the predictive data with the actual data, the implementation process of correcting the leakage gas diffusion loss coefficient includes steps S101 to S105 detailed as following:

S101: obtaining the long-term operation deviation convergence condition in accordance with the automatically calculated unrecognizable leakage rate and the manually calculated unrecognizable leakage rate.

Specifically, the automatically calculated unrecognizable leakage rate $L_{nq}$ is compared with the unrecognizable leakage rate $L_{nq}^{'}$ manually calculated by the operator, and the long-term operation deviation convergence condition is calculated according to the following formula:

$$\delta_1 = \left| \frac{L_{nq} - L_{nq}^{'}}{L_{nq}^{'}} \right| \times 100\%,$$

wherein $\delta_1$ is the long-term operation deviation convergence condition.

S102: If the absolute difference between the automatically calculated unrecognizable leakage rate and the manually calculated unrecognizable leakage rate within a preset time range is always less than a preset difference, and the long-term operation deviation convergence condition is less than or equal to the preset first convergence coefficient, automatic calculation is used instead of manual calculation.

Specifically, if the absolute difference between the automatically calculated unrecognizable leakage rate and the manually calculated unrecognizable leakage rate within the preset time range is always less than the preset difference, that is, for a long time within the preset time range, if $L_{nq} \approx L_{nq}^{'}$, and the long-term operation deviation convergence condition is less than or equal to the preset first convergence coefficient, instead of the operator's manual calculation, automatic calculation is used to improve the computing ability.

S103: If the relative error of the current total leakage rate with respect to the automatically calculated unrecognizable leakage rate is less than or equal to a preset second convergence coefficient, the leakage gas diffusion loss coefficient is confirmed as being set reasonably.

Specifically, if the relative error of the current total leakage rate with respect to the automatically calculated unrecognizable leakage rate is less than or equal to the preset second convergence coefficient, the leakage gas diffusion loss coefficient is confirmed as being set reasonably and no correction being needed.

S104: If the current relative error is greater than the second convergence coefficient, and the total leakage rate is greater than the automatically calculated unrecognizable leakage rate, the loss rate in the gas diffusion process is increased according to the preset step length, and the gas mass ratio at the leakage source location is corrected.

S105: If the current relative error is greater than the second convergence coefficient, and the total leakage rate is less than the automatically calculated unrecognizable leakage rate, the loss rate in the gas diffusion process is reduced according to the preset step length, and the gas mass ratio at the leakage source location is corrcted.

In the embodiment as shown in Fig. 1, the unit operating condition signal is acquired, the availability of the leakage monitoring data is determined according to the unit operating condition signal. If the leakage monitoring data is in an available state, the process system state signal and the leakage monitoring instrument data are obtained, and the operating state of the process system is determined according to the process system state signal, the comprehensive state of the leakage monitoring instrument and the system is determined according to the leakage monitoring instrument data, monitoring channel self-check and system fault self-diagnosis, and reliability of the leakage monitroing data is determined according to the operating state and comprehensive state. If the leakage monitoring data is reliable, leakage source positioning analysis is carried out to determine the location of the leakage source, and a leakage rate quantitative calculation is performed based on the location of the leakage source. If the analysis result of the leakage source positioning analysis and the calculation result of the leakage rate quantitative calculation both indicate occurrence of leakage and the leakage response characteristics are met, the leakage alarm is triggered, and the leakage alarm prompt information including the leakage rate change curve and the leakage source location information is output, so that the operator can carry out periodic leakage rate test regularly based on the leakage alarm prompt information.

Via the combination of unit operating condition judgment, process system fault diagnosis, instrument system fault diagnosis, leakage source positioning diagnosis and leakage source quantitative diagnosis, a comprehensive leakage diagnosis is realized, which effectively improves the accuracy of leakage monitoring and diagnosis, reduces personnel intervention of the operator, reduces human failures, and improves the automation level of leakage monitoring. At the same time, if the operator initiates the periodic leakage rate test is detected, the predictive data of the periodic leakage rate test is calculated, and after the periodic leakage rate test is finished, the actual data of the periodic leakage rate test manually calculated by the operator is obtained. Via comparison between the predictive data and the actual data, on the one hand, whether or not to use the system's automatic calculation instead of the operator's manual calculation based on the comparison result is judged to improve the computing power. On the other hand, by correcting the leakage gas diffusion loss coefficient, more accurate judgment basis is provided for subsequent leakage monitoring and comprehensive diagnosis, thereby further improving the accuracy of leakage monitoring and diagnosis.

On the basis of the embodiment as shown in Fig. 1, determining the availability of leakage monitoring data according to the unit operating condition signal mentioned in step S1 will be described in detail in the embodiment below.

Fig. 4 shows a specific implementation process of step S1 according to one embodiment of the present invention is described in detail as following.

S11: acquiring the operating parameters of the nuclear power plant reactor, and determining the unit operating condition signal based on the operating parameters.

Specifically, the reactor operating parameters are acquired, including but not limited to power $P_i$, temperature $T_i$ and pressure $p_i$. The operating condition of the nuclear power plant unit is determined according to the reactor operating parameters. The specific logical calculation formula is $R_i = (P_i \geq P_{i0})\&(T_i \geq T_{i0})\&(p_i \geq p_{i0})$, wherein $P_{i0}$ is a preset power threshold, $T_{i0}$ is a pre set temperature threshold, and $p_{i0}$ is a preset pressure threshold.

The value of the operating condition signal $R_i$ of the nuclear power plant unit is 1 or 0, wherein $R_i = 1$ means the $i$ th mode.

S12: If the unit operating condition signal does not meet the preset operating condition requirements, the availability of leakage monitoring data is confirmed as unavailable.

Specifically, if the operating condition signal $R_i$ obtained in step S11 does not meet the preset operating condition requirements, the leakage monitoring system is confirmed as faulty and the leakage cannot be monitored, that is, the availability of the leakage monitoring data is confirmed as unavailable.

It should be noted that, the preset operating condition requirements can be specifically set according to actual application needs, and there is no restriction in the present invention.

S13: If the unit operating condition signal meets the preset operating condition requirements, the availability of the leakage monitoring data is confirmed as in an available state.

Specifically, if the operating condition signal obtained in step S11 meets the preset operating condition requirements, the leakage monitoring system is confirmed as operating normally and can monitor the leakage, that is, the availability of the leakage monitoring data is confirmed as in an available state.

In the embodiment as shownin in Fig. 4, the operating parameters of the nuclear power plant reactor are acquired, and the unit operating conditions are determined as new according to the operating parameters. If the operating condition signals of the unit do not meet the preset operating conditions, the availability of the leakage monitoring data is confirmed as in an unavailable state, otherwise, the availability of the leakage monitoring data is confirmed as in an available state. Via the analysis of operating condition signals, the availability of leakage monitoring data is determined, so as to provide a guarantee for the correct diagnosis of subsequent leakage, avoid possible misdiagnosis, and improve the accuracy of leakage monitoring.

On the basis of the embodiment shown in Fig. 1, the leakage monitoring instrument data includes an in-situ leakage monitoring instrument value and a reference point leakage monitoring instrument value. Judging whether the leakage monitoring instrument and the system are faulty by performing logical operations on the diagnostic leakage monitoring instrument data, the monitoring channel self-check result, and the system fault self-diagnostic result, and obtaining the comprehensive state of the leakage monitoring instrument and the system in S4 will be further described in detail in veiw of the embodiment as following.

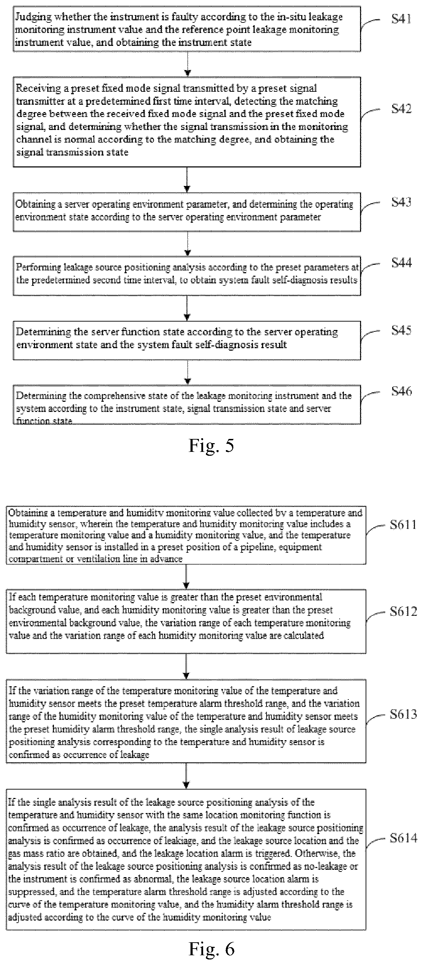

Fig. 5 shows a specific implementation process of step S4 according to one embodiment of the present invention, which includes:

S41: judging whether the instrument is faulty according to the in-situ leakage monitoring instrument value and the reference point leakage monitoring instrument value, and obtaining the instrument state.

Specifically, obtaining the in-situ leakage monitoring instrument value $M_i$ and the reference point leakage monitoring instrument value $M_0$ wherein the reference point may be the air outlet.

The logic operation for instrument fault judgment is $D_1 = D_{11}\&D_{12}\&...\&D_{1i}$, wherein $D_1$ is the state of the instrument, $D_{1i} = (M_i \geq \min[\overline{\overline{M}},M_0])$, and $\overline{\overline{M}}$ is the arithmetic average value of the in-situ leakage monitoring instrument $M_i$. If $D_1$ is 0, the instrument state is determined to be faulty; if $D_1$ is 1, the instrument state is determined to be normal.

S42: receiving a preset fixed mode signal transmitted by a preset signal transmitter at a predetermined first time interval, detecting the matching degree between the received fixed mode signal and the preset fixed mode signal, and determining whether the signal transmission in the monitoring channel is normal according to the matching degree, and obtaining the signal transmission state.

Specifically, the monitoring channel self-check is performed at a first time interval, including the preset fixed mode signal transmitted by the preset signal transmitter. When the fixed mode signal is received, the matching degree $\chi$ between the received fixed mode signal and the preset fixed mode signal is detected.

The judgment logic operation for self-checking of the monitoring channel is $D_2 (\chi \geq a)$, wherein $D_2$ is the signal transmission state and $a$ is a preset matching degree threshold. If $D_2$ is 0, the signal transmission state is determined as faulty; if $D_2$ is 1, the signal transmission state is determined as normal.

It should be noted that, the first time interval can usually be set as 30 minutes, and the value of the matching degree threshold $a$ can be set as 70%. However, the first time interval and the matching degree threshold can be set according to the requirements of actual applications.

S43: Obtaining a server operating environment parameter, and determining the operating environment state according to the server operating environment parameter.

Specifically, the server operating environment parameters are read. The server operating environment parameters include but are not limited to voltage $V$, power $P_D$, etc. The logical operation for judging whether the operating environment state is normal according to the server operating environment parameters is

$$D_{31} = \left(\frac{|V-V_0|}{V_0} > \beta\%\right) \& (P_{D0} > P_D) \& (\delta * P_{D0} \leq P_D)$$

, wherein $D_{31}$ is the operating environment state, $V_0$ is a preset voltage reference value, $P_{D0}$ is a preset power threshold, $\delta$ is a preset power adjustment parameter, and $\beta$ is a preset voltage deviation rate threshold.

It should be noted that, the preset power adjustment parameter can usually be set as 1.5, and the preset voltage deviation rate threshold can usually be set as 15. However, the power adjustment parameters and the voltage deviation rate threshold can be set according to the requirements of actual applications.

S44: performing leakage source positioning analysis according to the preset parameters at the predetermined second time interval, to obtain system fault self-diagnosis results.

Specifically, the system fault self-diagnosis is performed at a predetermined second time interval, including performing leakage source positioning analysis according to the preset parameters, calculating the location of the leakage source and comparing it with the preset result to judge whether the leakage source positioning function is normal and obtain the system fault self-diagnosis result $D_{32}$. If the comparison result indicates that the leakage source positioning function is normal, the value of $D_{32}$ is assigned to 1. If the comparison result indicates that the leakage source positioning function is abnormal, the value of $D_{32}$ is assigned 0.

S45: determining the server function state according to the server operating environment state and the system fault self-diagnosis result.

Specifically, according to the operating environment state $D_{31}$ obtained in step S43 and the system fault self-diagnosis result $D_{32}$ obtained in step S44, the server function state $D_3$ is determined through logical operation $D_3 = D_{31} \& D_{32}$. If $D_3$ is 0, the server function state is determined to be faulty; if the server function state $D_3$ is 1, the server function status is determined to be normal.

S46: determining the comprehensive state of the leakage monitoring instrument and the system according to the instrument state, signal transmission state and server function state.

Specifically, the logical operation for determining the comprehensive state of the leakage monitoring instrument and the system *is* $D= D_1\&D_2\&D_3$, wherein $D$ is the comprehensive state of the leakage monitoring instrument and the system, $D_1$ is the instrument state obtained in step S41, $D_2$ is the signal transmission state obtained in step S42, and $D_3$ is the server function state obtained in step S45. If $D$ is 0, the comprehensive state of the leakage monitoring instrument and the system is determined as faulty; if $D$ is 1, the comprehensive state of the leakage monitoring instrument and the system is determined as normal.

In the embodiment as shown in Fig. 5, whether the instrument is faulty is judged according to the in-situ leakage monitoring instrument value and the reference point leakage monitoring instrument value, and the instrument state is obtained. The monitoring channel self-check is performed at a preset first time interval, the matching degree of the fixed mode signal is detected, and whether the signal transmission in the monitoring channel is normal is determined according to the self-check result, to obtain the signal transmission state. The server operating environment parameters is obtained, the operating environment state is determined according to the server operating environment parameters; A system fault self-diagnosis is performed at a preset second time interval to obtain the system fault self-diagnosis result. The server function state is determined according to the operating environment state and the system fault self-diagnosis result. The comprehensive state of the leakage monitoring instrument and system is determined according to the instrument state, signal transmission state and server function state, to realize accurate judgment of the state of the leakage monitoring instrument and the system, thereby providing a guarantee for the correct diagnosis of the subsequent leakage, avoiding possible misdiagnosis, and improving the accuracy of leakage monitoring.

On the basis of the embodiment as shown in Fig. 1, the specific implementation process of performing leakage source positioning analysis and determining the leakage source location in step S6 will be described in detail in the embodiment below.

Fig. 6 shows the specific implementation process of performing leakage source positioning analysis and determining the leakage source location in step S6 according to one embodiment of the present invention, including:

S611: obtaining a temperature and humidity monitoring value collected by a temperature and humidity sensor, wherein the temperature and humidity monitoring value includes a temperature monitoring value and a humidity monitoring value, and the temperature and humidity sensor is installed in a preset position of a pipeline, equipment compartment or ventilation line in advance.

In the embodiment of the present invention, the temperature and humidity sensor includes a sensor that collects temperature, a sensor that collects humidity, and a sensor that collects temperature and humidity at the same time. The temperature and humidity sensor is installed in a preset position of a pipeline, equipment compartment or ventilation line in advance. The preset position can be selected according to the actual situation of the pipeline, equipment compartment or ventilation line.

Specifically, when dry cold air passes through the pipeline, the equipment compartment or the ventilation line, the temperature and humidity sensor collects the temperature and humidity monitoring value, and the server device performing leakage monitoring obtains the temperature and humidity monitoring value.

S612: If each temperature monitoring value is greater than the preset environmental background value, and each humidity monitoring value is greater than the preset environmental background value, the variation range of each temperature monitoring value and the variation range of each humidity monitoring value are calculated.

In the embodiment of the present invention, a temperature and humidity sensor is arranged on the air supply main pipe of the ventilation system, the temperature and humidity data collected by the temperature and humidity sensor is used as the environmental background value. The environmental background value can be used as the judgment reference value of the temperature and humidity monitoring value, and the temperature and humidity sensor can be manually calibrated according to the temperature and humidity monitoring value and the environmental background value.

During the transmission of dry cold air in the pipeline, equipment compartment or ventilation line, leakage may cause the dry cold air to be heated or become damp, causing changes of temperature and humidity in the pipeline, equipment compartment or ventilation line.

Specifically, each temperature and humidity monitoring value is compared with the environmental background value. If each temperature and humidity monitoring value is greater than the preset environmental background value, the variation range of the temperature and humidity monitoring value in the preset time period is calculated according to the temperature and humidity monitoring valu collected by the temperature and humidity sensor within a preset time period.

S613: If the variation range of the temperature monitoring value of the temperature and humidity sensor meets the preset temperature alarm threshold range, and the variation range of the humidity monitoring value of the temperature and humidity sensor meets the preset humidity alarm threshold range, the single analysis result of leakage source positioning analysis corresponding to the temperature and humidity sensor is confirmed as occurrence of leakage.

Specifically, for the temperature and humidity sensor, according to the variation range of the temperature and humidity monitoring value of the temperature and humidity sensor calculated in step S612, whether the variation range meets the preset alarm threshold range corresponding to the temperature and humidity sensor is judged. If the variation range of each temperature and humidity monitoring value meets the corresponding alarm threshold range, the single analysis result of the leakage source positioning analysis corresponding to the temperature and humidity sensor is confirmed as occurrence of leakage.

S614: If the single analysis result of the leakage source positioning analysis of the temperature and humidity sensor with the same location monitoring function is confirmed as occurrence of leakage, the analysis result of the leakage source positioning analysis is confirmed as occurrence of leakiage, and the leakage source location and the gas mass ratio are obtained, and the leakage location alarm is triggered. Otherwise, the analysis result of the leakage source positioning analysis is confirmed as no-leakage or the instrument is confirmed as abnormal, the leakage source location alarm is suppressed, and the temperature alarm threshold range is adjusted according to the curve of the temperature monitoring value, and the humidity alarm threshold range is adjusted according to the curve of the humidity monitoring value.

Specifically, if the single analysis result $L_{m,l}$ of the leakage source positioning analysis of other temperature and humidity sensors having the same location monitoring function is also confirmed as occurrence of leakage, that is, $L_{m,l}$ is 1, a leakage location alarm $L_l$ is triggered. The specific logic judgment process is $L_l = L_{n,l}$ & $L_{m,l} = 1$: when $L_l = L_{n,l}$ & $L_{m,l} = 1$, the leakage location alarm $L_l$ is triggered, and the leakage source location and gas mass ratio $\alpha_0$ are obtained; when $L_l = L_{n,l}$ & $L_{m,l} = 0$, it is determined as non-leakage or instrument abnormality, the leakage source location alarm $L_l$ is suppressed, and the alarm thresholds $A_{\Delta T}$ and $A_{\Delta T}$ are adjusted according to the monitoring value curve. The alarm threshold range is within a reasonable range, so that the alarms of the temperature and humidity sensors with functional redundancy are consistent within a period of time.

For example, for leakage caused by welds connecting the equipment and the pipeline, the temperature and humidity sensor on the pipeline and the temperature sensor in the equipment compartment constitute functional redundancy, and both should respond. At the same time, because the leakage gas is transmitted along the ventilation pipeline, the temperature and humidity sensor on the pipeline or the temperature and humidity sensor in the equipment compartment are also functionally redundant with the temperature and humidity sensor on the ventilation pipeline, and both should respond. Assuming that the alarm threshold range of the temperature and humidity sensors at the preset positions of the pipelines, equipment compartments and ventilation lines are all within the range of 28% to 30% of the temperature and humidity monitoring values, the changes of each temperature and humidity monitoring value variation are calculated. If each change range is within the range of 28% to 30%, the diagnosis result of the leakage source positioning diagnosis is confirmed as occurrence of leakage, and the leakage location alarm is triggered.

In the embodiment as shown in Fig. 6, the temperature and humidity monitoring values collected by the temperature and humidity sensors installed in the preset positions of the pipelines, equipment compartments or ventilation lines are acquired in advance. If each temperature and humidity monitoring value is greater than the preset environmental background value, the variation range of each temperature and humidity monitoring value is calculated, and whether the variation range of the temperature and humidity monitoring value of each temperature and humidity sensor meets the preset alarm threshold range corresponding to the temperature and humidity sensor is judged, and the temperature and humidity sensor functional redundancy judgment is performed. If the result of functional redundancy judgment is consistent response, that is, the variation range of each temperature and humidity monitoring value meets the corresponding alarm threshold range, the diagnosis result of leakage source positioning diagnosis is confirmed as leakage and the leakage locationg alarm is triggered. Otherwise, if the result of the functional redundancy judgment is that the response is inconsistent, that is, there is a preset number of temperature and humidity sensors whose temperature and humidity monitoring value variation do not meet the corresponding alarm threshold range, the alarm threshold range is adjusted to achieve accurate leakage source positioning diagnosis, thereby effectively improving the accuracy of leakage monitoring. At the same time, the diagnosis process does not require the intervention of operators, thereby reducing human failures and improving the automation level of the leakage monitoring.

On the basis of the embodiment as shown in Fig. 6, the location of the leakage source further includes the reactor coolant pressure boundary (RCPB) and the main steam pipeline, wherein the leakage generated at the reactor coolant pressure boundary position includes leakage gas and leakage liquid, the gas mass ratio is $\alpha$, the loss rate during gas diffusion is $\eta_0$, the leakage generated at the main steam pipeline position includes leakage gas, the monitoring data of leakage gas includes the monitoring value of fan condensate flow, pit condensate leakage rate, and the monitoring data of leakage liquid includes the pit ground drain leakage rate.

The pit condensate leakage rate and the pit ground drain leakage rate are both pit liquid level conversion leakage rate, which converts the liquid level change of the pit into corresponding leakage rate. It is understandable that, the greater the liquid level change, the higher the corresponding leakage rate. On the contrary, the smaller the liquid level change range, the lower the corresponding leakage rate.

The pit condensate leakage rate refers to the leakage rate corresponding to the pit liquid level change caused by the flash gas or main steam being condensed by the ventilation system and collected into the pit of the nuclear island drain exhaust system through the drain pipeline. The pit ground drain leakage rate refers to the leakage rate corresponding to the pit liquid lever change caused by the flashing liquid collected to the pit of the nuclear island drain exhaust system through the ground drain.

When the leakage source is at the reactor coolant pressure boundary, that is, when the RCPB leaks, the high-temperature and high-pressure cooling water flashes to form flash gas and flash liquid respectively; when the main steam pipeline leaks, only the main steam is formed.

The flash gas or main steam causes temperature and humidity changes between the pipeline and the insulation layer, and changes the temperature of the containment atmosphere in the equipment compartment and the ventilation pipeline during the transmission process. It is condensed by the ventilation system and collected into the pit of the drain exhaust system of the nuclear island through the drain pipeline, causing the flow rate change in the drain pipeline and the change of the pit liquid level. The flashed liquid is drained through the ground and collected into the pit of the drain system of the nuclear island, causing liquid level change in the pit.

Further, when the location of the leakage source is the reactor coolant pressure boundary, the specific implementation process of leakage rate quantitative calculation according to the leakage source location mentioned in step S6 will be described in detail in one embodiment of the present invention below.

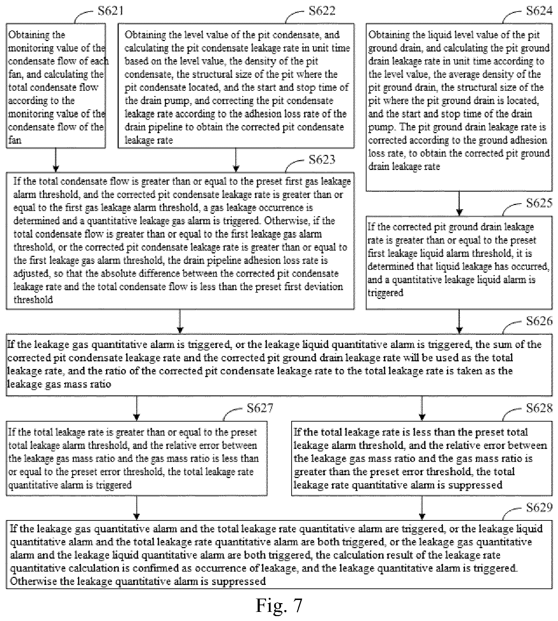

Fig.7 shows a specific implementation process of leakage rate quantitative calculation according to the leakage source location in step S6 in accordance with one embodiment of the present invention.

S621: obtaining the monitoring value of the condensate flow of each fan, and calculating the total condensate flow according to the monitoring value of the condensate flow of the fan.

Specifically, the fan condensate flow monitoring value refers to the flow monitoring value when the flash gas or main steam is condensed by the ventilation system and then passes through the drain pipeline. Obtaining the monitoring value of the condensate flow of each fan, and calculating the total condensate flow $r_{11}$ according to the monitoring value of the condensate flow of the fan.

S622: Obtaining the level value of the pit condensate, and calculating the pit condensate leakage rate in unit time based on the level value, the density of the pit condensate, the structural size of the pit where the pit condensate located, and the start and stop time of the drain pump, and correcting the pit condensate leakage rate according to the adhesion loss rate of the drain pipeline to obtain the corrected pit condensate leakage rate.

Specifically, the pit condensate can be recorded as pit A. The liquid level value of pit A is obtained. The leakage rate of pit A in unit time is calculated based on the density of pit condensate, the structural size of pit A, and the start and stop time of the drain pump of pit A. The leakage rate $r_{12}$ is corrected d according to the adhesion loss rate $\eta_1$ of the drain pipeline, and the corrected leakage rate $r_{12}$ of pit A is calculated.

S623: If the total condensate flow is greater than or equal to the preset first gas leakage alarm threshold, and the corrected pit condensate leakage rate is greater than or equal to the first gas leakage alarm threshold, a gas leakage occurrence is determined and a quantitative leakage gas alarm is triggered. Otherwise, if the total condensate flow is greater than or equal to the first leakage gas alarm threshold, or the corrected pit condensate leakage rate is greater than or equal to the first leakage gas alarm threshold, the drain pipeline adhesion loss rate is adjusted, so that the absolute difference between the corrected pit condensate leakage rate and the total condensate flow is less than the preset first deviation threshold.

Specifically, a logical operation $L_{gas} = (r_{11} \geq r_{10}) \& (r_{12} \geq r_{10})$ is used to judge whether a quantitative leakage gas alarm is triggered, wherein $L_{gas}$ is the quantitative leakage gas alarm, and $r_{10}$ is a preset first leakage gas alarm threshold.

When $L_{gas}$ is 1, it is preliminarily determined that a gas leakage has occurred, and a quantitative leakage gas alarm $L_{gas}$ is triggered.

When $L_{gas}$ is 0 and the result of the logical operation $$L'_{gas} = \left( r_{11} \geq r_{10} \right) \| \left( r_{12} \geq r_{10} \right)$$ is 1, the drain pipeline adhesion loss rate $\eta_1$ is adjusted, so that the absolute difference between the corrected pit condensate leakage rate $r_{12}$ and the total condensate flow $r_{11}$ is less than the preset first deviation threshold, that is $r_{11} \approx r_{12} = r_1$.

It should be noted that, the preset first deviation threshold can be set and adjusted according to actual application needs.

S624: Obtaining the liquid level value of the pit ground drain, and calculating the pit ground drain leakage rate in unit time according to the level value, the average density of the pit ground drain, the structural size of the pit where the pit ground drain is located, and the start and stop time of the drain pump. The pit ground drain leakage rate is corrected according to the ground adhesion loss rate, to obtain the corrected pit ground drain leakage rate.

Specifically, the pit ground drain can be recorded as pit B. The liquid level value of pit B is obtained. The leakage rate of pit B in unit time is calculated based on the liquid lever, the average density of g pit round drain, the structural size of pit B, and the start and stop time of the pit B drain pump. The leakage rate of pit B is corrected according to the ground environmental loss rate $\eta_2$, and the corrected pit B leakage rateis $r_{21}$. The ground adhesion loss rate refers to the loss rate caused by factors such as ground roughness and slope.

It should be noted that, if the drain pump of pit A fails, pit A overflows to pit B. At this time, and the leakage rate $r_{22}$ of pit B can represent the total leakage rater.

S625: If the corrected pit ground drain leakage rate is greater than or equal to the preset first leakage liquid alarm threshold, it is determined that liquid leakage has occurred, and a quantitative leakage liquid alarm is triggered.

Specifically, a logical operation $L_{liquid} = (r_{21} \geq r_{20})$ is used to judge whether a leakage liquid quantitative alarm is triggered, wherein $L_{liquid}$ is a leakage liquid quantitative alarm, and $r_{20}$ is a preset first leakage liquid alarm threshold.

When $L_{liquid}$ is 1, it is preliminarily determined that liquid leakage has occurred, and the leakage liquid quantitative alarm $L_{liquid}$ is triggered.

S626: If the leakage gas quantitative alarm is triggered, or the leakage liquid quantitative alarm is triggered, the sum of the corrected pit condensate leakage rate and the corrected pit ground drain leakage rate will be used as the total leakage rate, and the ratio of the corrected pit condensate leakage rate to the total leakage rate is taken as the leakage gas mass ratio.

Specifically, if the result of the logical operation $(\overline{L_{gas}} \& L_{liquid}) | L_{gas} \& \overline{L_{liquid}})$ is 1, the sum of the corrected pit A

leakage rate $r_1$ and the corrected pit B leakage rate $r_2$ are calculate, and the sum is used as the total leakage rate **r**, and the ratio of the corrected leakage rate $r_1$ of pit A to the total leakage rate **r** is calculated, and the ratio is used as the leakage gas mass ratio $\alpha$.

S627: If the total leakage rate is greater than or equal to the preset total leakage alarm threshold, and the relative error between the leakage gas mass ratio and the gas mass ratio is less than or equal to the preset error threshold, the total leakage rate quantitative alarm is triggered.

Specifically, a logical operation $L_{total} = (r \geq r_0) | (r_{22} \geq r_0)$ is used to judge whether a total leakage rate quantitative alarm is triggered, wherein $L_{total}$ is the total leakage rate quantitative alarm, and $r_0$ is the preset total leakage alarm threshold.

If $L_{total}$ is 1, and the relative error $\delta_\alpha$ between the leakage gas mass ratio $\alpha$ and the gas mass ratio $\alpha_0$ obtained in step S614 is less than or equal to the preset error threshold, it is finally determined that a leakage has occurred, and

$$\delta_\alpha = \left| \frac{\alpha - \alpha_0}{\alpha_0} \right| \times 100\%$$

a total leakage rate quantitative alarm $L_{total}$ is triggered, wherein, .

It should be noted that, the preset error threshold can usually be set as 20%. It can also be specifically set according to actual application needs, and will not be limited.

S628: If the total leakage rate is less than the preset total leakage alarm threshold, and the relative error between the leakage gas mass ratio and the gas mass ratio is greater than the preset error threshold, the total leakage rate quantitative alarm is suppressed.

Specifically, if $L_{total}$ is 0 and the relative error $\delta_\alpha$ is greater than the preset error threshold, it is determined that other liquids may be mistakenly discharged into the monitoring instrument, and the total leakage rate quantitative alarm $L_{total}$ is suppressed.

S629: If the leakage gas quantitative alarm and the total leakage rate quantitative alarm are triggered, or the leakage liquid quantitative alarm and the total leakage rate quantitative alarm are both triggered, or the leakage gas quantitative alarm and the leakage liquid quantitative alarm are both triggered, the calculation result of the leakage rate quantitative calculation is confirmed as occurrence of leakage, and the leakage quantitative alarm is triggered. Otherwise the leakage quantitative alarm is suppressed.

In the embodiment as shown in Fig. 7, in the process of leakage rate quantitative calculation of the reactor coolant pressure boundary, the monitoring value of the condensate flow rate of each fan is obtained, and the total condensate flow rate is calculated according to the monitoring value of the condensate flow rate of the fan. The liquid level of the pit condensate is obtained. The pit condensate leakage rate in unit time is calculated based on the liquid level value, the density of the pit condensate, the structural size of the pit where the pit condensate located, and the start and stop time of the drain pump. The pit condensate leakage rate is corrected according to the adhesion loss rate of the drain pipeline, and the corrected pit condensate leakage rate is obtained. Whether there is a gas leakage and whether a quantitative gas leakage alarm is triggered are preliminary determined based on the corrected pit condensate leakage rate. At the same time, the liquid level value of the pit ground drain is obtained, and the pit ground drain leakage rate in unit time is calculated according to the liquid level value, the average density of the pit ground drain, and the structure size of the pit where the pit ground drain located, and the start and stop time of the drain pump. The pit ground drain leakage rate is corrected according to the ground adhesion loss rate to obtain the corrected pit ground drain leakage rate. Whether liquid leakage occurs and whether the leakage liquid quantitative alarm is triggered is preliminarily determined based on corrected pit ground drain leakage rate. The total leakage rate is determined based on the leakage gas quantitative alarm and the leakage liquid quantitative alarm. Whether a total leakage rate quantitative alarm is triggered is determined based on the total leakage rate and the relative error between the leakage gas mass ratio and the gas mass ratio. Finally, whether the calculation result of the leakage rate quantitative calculation indicates occurrence of leakage, whether the leakage quantitative alarm or quantitative leakage suppression alarm is triggered are confirmed according to the leakage gas quantitative alarm, the leakage liquid quantitative alarm and the total leakage rate quantitative alarm, to realize accurate diagnosis of RCPB leakage and timely alarm, thereby effectively improving the accuracy of leakage monitoring. At the same time, the diagnosis process does not require operator intervention, thereby reducing human failures and improving the automation of leakage monitoring level.

Further, when the the leakage source location is the main steam pipeline, the specific implementation process of quantitatively calculating the leakage rate according to the leakage source location mentioned in step S6 will be described in detail in the following embodiment.

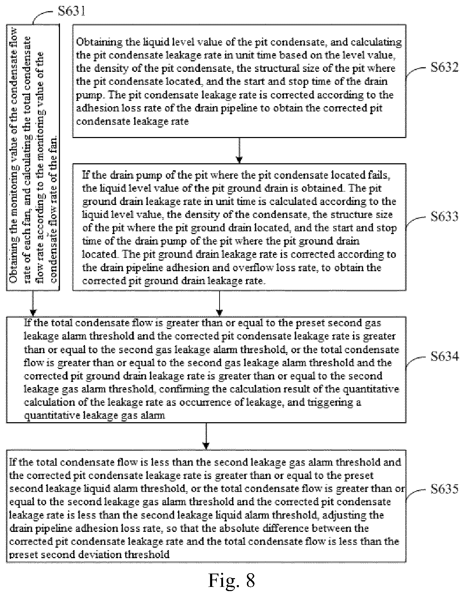

Fig. 8 shows another embodiment of implementing leakage rate quantitative calculation according to the leakage source location in step S6 of the present invention, which is described in detail as following.

S631: obtaining the monitoring value of the condensate flow rate of each fan, and calculating the total condensate flow rate according to the monitoring value of the condensate flow rate of the fan.

S632: obtaining the liquid level value of the pit condensate, and calculating the pit condensate leakage rate in unit time based on the level value, the density of the pit condensate, the structural size of the pit where the pit condensate located, and the start and stop time of the drain pump. The pit condensate leakage rate is corrected according to the adhesion loss rate of the drain pipeline to obtain the corrected pit condensate leakage rate.

Specifically, the implementation process of step S631 and step S632 may adopt the same processing manner as the above-mentioned step S621 and step S622, and will not be repeated here.

S633: If the drain pump of the pit where the pit condensate located fails, the liquid level value of the pit ground drain is obtained. The pit ground drain leakage rate in unit time is calculated according to the liquid level value, the density of the condensate, the structure size of the pit where the pit ground drain located, and the start and stop time of the drain pump of the pit where the pit ground drain located. The pit ground drain leakage rate is corrected according to the drain pipeline adhesion and overflow loss rate, to obtain the corrected pit ground drain leakage rate.

Specifically, if the drain pump of pit A fails, the liquid level value of pit B is obtained. The leakage rate of pit B in unit time is calculated according to the desity of the condensate, the structural size of pit B, and the start and stop time of the drain pump of pit B. The leakage rate of pit B is corrected based on the drain pipeline adhesion and overflow loss rate $\eta_1$, to calculate the corrected pit B leakage rate $r_{22}$.

S634: If the total condensate flow is greater than or equal to the preset second gas leakage alarm threshold and the corrected pit condensate leakage rate is greater than or equal to the second gas leakage alarm threshold, or the total condensate flow is greater than or equal to the second gas leakage alarm threshold and the corrected pit ground drain leakage rate is greater than or equal to the second leakage gas alarm threshold, the calculation result of the quantitative calculation of the leakage rate is confirmed as occurrence of leakage, and a quantitative leakage gas alarm is triggered.

Specifically, if the logical operation result of $L_{gas} = \left( r_{11} \geq r_{10}' \right) \& \left( r_{12} \geq r_{10}' \right)$ or $L_{gas} = \left( r_{11} \geq r_{10}' \right) \& \left( r_{22} \geq r_{10}' \right)$ is 1, the calculation result of the leakage rate quantitative calculation is determined as occurrence of leakage, and the leakage gas quantitative alarm $L_{gas}$ is triggered, wherein $r_{10}'$ is the preset second leakage gas alarm threshold.

S635: If the total condensate flow is less than the second leakage gas alarm threshold and the corrected pit condensate leakage rate is greater than or equal to the preset second leakage liquid alarm threshold, or the total condensate flow is greater than or equal to the second leakage gas alarm threshold and the corrected pit condensate leakage rate is less than the second leakage liquid alarm threshold, the drain pipeline adhesion loss rate is adjusted, so that the absolute difference between the corrected pit condensate leakage rate and the total condensate flow is less than the preset second deviation threshold.

Specifically, if the logical operation result of $L_{gas} = \left( r_{11} \geq r_{10}' \right) \& \left( r_{12} \geq r_{10}' \right)$ is 0 and the logical operation result of $L_{gas}' = \left( r_{11} \geq r_{10}' \right) \| \left( r_{22} \geq r_{10}' \right)$ is 1, the drain pipeline adhesion loss rate $\eta_1$ is adjusted, so that the absolute difference between the corrected pit condensate leakage rate $r_{12}$ and the total condensate flow $r_{11}$ is less than the preset second deviation threshold, ie $r_{11} \approx r_{12} = r_1$.

In the embodiment as shown in Fig. 8, in the process of leakage rate quantitative calculation of the main steam pipeline, the monitoring value of the condensate flow of each fan is obtained, and the total condensate flow is calculated based on the monitoring value of the condensate flow of the fan. The liquid level value of the pit condensate is obtained, and the pit condensate leakage rate in unit time is calculated based on the liquid level value, the density of the pit condensate, the structural size of the pit where the pit condensate located, and the start and stop time of the drain pump. The pit condensate leakage rate is corrected according to the drain pipeline adhesion loss rate to obtain the corrected pit condensate leakage rate. If the drain pump of the pit where the pit condensate located fails, the corrected pit ground drain leakage rate is calculated. According to the total condensate flow and the pit condensate leakage rate, whether there is leakage and whether the leakage quantitative alarm is triggered is confirmed, which realizes the accurate diagnosis of the main steam pipeline leakage and timely alarm, thereby effectively improving the accuracy of leakage monitoring. At the same time, the diagnosis process does not require the intervention of operators, which reduces human failures and improves the automation level of leakage monitoring.

It should be noted that, in the above-mentioned embodiment, the combination of different alarms such as leakage fault alarm, leakage location alarm, leaked gas quantitative alarm, leakage liquid quantitative alarm, total leakage rate quantitative alarm, realize the comprehensive diagnosis of the leakage. The operator can analyze the specific leakage location and the cause of the leakage accurately and quickly according to the combined alarms, which can effectively improve the accuracy of leakage monitoring and the intelligence degree of the alarm.

It should be understood that, the sequence number of each step in the foregoing embodiment does not mean the execution order. The execution sequence of each process should be determined by its function and internal logic, and should not be limited to the implementation process of the embodiment of the present invention.

Corresponding to the leakage monitoring method of the above embodiment, Fig. 7 shows a schematic diagram of a nuclear power plant leakage monitoring alarm system according to one embodiment of the present invention. For ease of description, only the parts related to the embodiment of the present invention are shown.

Referring to Fig. 7, the nuclear power plant leakage monitoring alarm system includes:

a data availability diagnosis module 71, configured to acquire the unit operating condition and determine the availability of leakage monitoring data according to the unit operating condition signal;

a signal and data acquisition module 72, configured to acquire the process system state signal and leakage monitoring instrument data if the leakage monitoring data is in an available state;

an operating state determination module 73, configured to determine whether the process system is faulty according to the process system state signal, and obtain the operating state of the process system;

a comprehensive state determination module 74, configured to judge whether the leakage monitoring instrument and system are faulty according to the leakage monitoring instrument data, monitoring channel self-check and system fault self-diagnosis, and obtain the comprehensive state of the leakage monitoring instrument and system;

a data reliability determination module 75, configured to determine the reliability of the leakage monitoring data according to the operating state and the comprehensive state;

a leakage detection module 76, configured to perform leakage source positioning analysis if the leakage detection data is reliable, determine the location of the leakage source, and perform leakage rate quantitative calculation according to the location of the leakage source; and

a leakage comprehensive diagnosis and alarm module 77, configured to trigger a leakage alarm if the analysis result of the leakage source positioning analysis and the calculation result of the leakage rate quantitative calculation both indicate occurrence of leakage and the leakage response characteristics are met.

Furthermore, the nuclear power plant leakage monitoring alarm system also includes:

a prompt information output module 78, configured to output the leakage alarm prompt information including the leakage rate change curve and the information of the leakage source location, so that the operator can carry out periodic leakage rate tests based on the leakage alarm prompt information;

a periodic leakage test module 79, configured to calculate the predictive data of the periodic leakage rate test if the operator initiates the periodic leakage rate test is detected, and obtain the actual data leakage rate of the periodic test manually calculated by the operator after the periodicleakage rate test is finished;

a parameter correction module 70, configured to correct the leakage gas diffusion loss coefficient by comparing the predictive data with the actual data.

Further, the data availability diagnosis module 71 includes:

an operating parameter acquisition sub-module 711, configured to acquire the operating parameters of the nuclear power plant reactor and determine the unit operating condition signal according to the operating parameters;

a first availability determination sub-module 712, configured to confirm that the leakage monitoring data is in an unavailable state if the unit operating condition signal does not meet the requirements of the preset operating condition; and

a second availability determination sub-module 713, configured to confirm that the leakage monitoring data as in an available state if the unit operating condition signal meets the preset operating condition requirements.

Further, the signal and data acquisition module 72 is also configured to:
compare the air volume, temperature and pressure of the ventilation system in each process system with the preset air volume threshold, the preset temperature threshold and the preset pressure threshold respectively, and determine the state signal of each process system according to the comparison result;

The operating state determination module 73 includes:

a logical operation sub-module 731, configured to perform logical AND operation on each process system state signal, and determine the operating state of the process system according to the calculation result;

a fault alarm sub-module 732, configured to trigger a process system fault alarm if the operating state is faulty.

Further, the leakage monitoring instrument data includes an in-situ leakage monitoring instrument value and a reference point leakage monitoring instrument value, and the comprehensive state determination module 74 includes:

an instrument detection sub-module 741, configured to judge whether the instrument is faulty and obtain the state of the instrument according to the in-situ leakage monitoring instrument value and the reference point leakage monitoring instrument value;

a monitoring channel self-checking sub-module 742, configured to receive a preset fixed mode signal transmitted by a preset signal transmitter at a predetermined first time interval, detect the matching degree of the received fixed mode signal and the preset fixed mode signal, determine whether the signal transmission in the monitoring channel is normal according to the matching degree, and obtain the signal transmission state,

an environment state determination sub-module 743, configured to obtain server operating environment parameter, and determine the operating environment state according to the server operating environment parameters;

a fault self-diagnosis sub-module 744, configured to perform leakage source positioning analysis according to preset parameters at a predetermined second time interval, to obtain the system fault self-diagnosis result;

a function state determination sub-module 745, configured to determine the server function state according to the operating environment state and the system fault self-diagnosis result;

a comprehensive state judgment sub-module 746, configured to determine the comprehensive state of the leakage monitoring instrument and the system according to the instrument state, signal transmission state and server function state.

Further, the leakage detection module 76 includes:

a temperature and humidity acquisition sub-module 7611, configured to acquire the temperature and humidity monitoring values collected by the temperature and humidity sensors, wherein the temperature and humidity monitoring values include temperature monitoring values and humidity monitoring values. The temperature and humidity sensors are installed in preset locations in the pipeline, equipment compartment or ventilation line in advance;

a change range calculation sub-module 7612, configured to calculate the change range of each temperature monitoring value and the change range of each humidity monitoring value if each temperature monitoring value is greater than the preset environmental background value, and each humidity monitoring value is greater than the preset environmental background value;

a single analysis sub-module 7613, configured to confirm that the single analysis result of the leakage source positioning analysis corresponding to the temperature and humidity sensor as a leakage if the change range of the temperature monitoring value of the temperature and humidity sensor meets the preset temperature alarm threshold range, and the change range of the humidity monitoring value of the temperature and humidity sensor meets the preset humidity alarm threshold range;

a leakage positioning alarm sub-module 7614, configured to confirm the analysis result of the leakage source positioning analysis as a leakage if the single analysis result of the leakage source positioning analysis of the temperature and humidity sensor with the same location monitoring function indicates occurrence of leakage, and obtain the leakage source location and gas mass ratio, and trigger the leakage location alarm. Otherwise, the analysis result is confirmed as non-leakage or abnormal instrument, the leakage location alarm is suppressed, and the temperature alarm threshold range is adjusted according to the temperature monitoring value curve, and the humidity alarm threshold range is adjusted according to the humidity monitoring value curve.

Further, the leakage source location includes the reactor coolant pressure boundary and the main steam pipeline. The leakage generated at the reactor coolant pressure boundary includes gas leakage and liquid leakage. The leakage generated at the location of the main steam pipeline includes gas leakage. The monitoring data of the leakage gas includes the fan condensate flow rate monitoring value, the pit condensate leakage rate, and the leakage liquid monitoring data includes the pit ground drain leakage rate.

Further, when the leakage source location is the reactor coolant pressure boundary, the leakage detection module 76 further includes:

a first total condensate flow calculation sub-module 7621, configured to obtain the condensate flow monitoring value of each fan, and calculate the total condensate flow according to the fan condensate flow monitoring value;

a first pit condensate leakage rate calculation sub-module 7622, configured to obtain the level value of the pit condensate, and calculate the pit condensate leakage rate per unit time according to the level value, the density of the pit condensate, the structure of the pit where the pit condensate is located, and the start and stop time of the drain pump, and correct the pit condensate leakage rate according to the drain pipeline adhesion loss rate to obtain the corrected pit condensate leakage rate;

a first leakage gas quantitative alarm sub-module 7623, configured to determine the occurrence of gas leakage and trigger the leakage gas quantitative alarm if the total condensate flow is greater than or equal to the preset first leaked gas alarm threshold, and the corrected pit condensate leakage rate is greater than or equal to the first leaked gas alarm threshold. If the total flow of condensate is greater than or equal to the first leakage gas alarm threshold, or if the corrected pit condensate leakage rate is greater than or equal to the first leakage gas alarm threshold, adjust the adhesion loss rate of the drainage pipeline, so that the absolute difference between the corrected pit condensate leakage rate and the total condensate flow is smaller than the preset first deviation threshold;

a first corrected pit ground drainage leakage rate calculation sub-module 7624, configured to obtain the liquid level value of the ground drainage of the pit, and calculate the pit ground drainage leakage rate per unit time according to the level value, the average density of the pit ground drainage, and the structural size of the pit where the ground drainage is located and the start and stop time of the drainage pump, and correct the pit ground drainage leakage rate according to the ground adhesion loss rate to obtain the corrected pit ground drainage leakage rate;

a leakage liquid quantitative alarm sub-module 7625, configured to determine occurrence of the liquid leakage and trigger the leakage liquid quantitative alarm if the corrected pit ground drainage leakage rate is greater than or equal to the preset first leakage liquid alarm threshold;

a total leakage rate calculation sub-module 7626, configured to use the sum of the corrected pit condensate leakage rate and the corrected pit ground drain leakage rate as the total leakage rate if the leakage gas quantitative alarm is triggered or the leakage liquid quantitative alarm is triggered, and take the ratio of the corrected pit condensate leakage rate to the total leakage rate as the leakage gas mass ratio;

a total leakage rate quantitative alarm sub-module 7627, configured to trigger the total leakage rate quantitative alarm if the total leakage rate is greater than or equal to the preset total leakage alarm threshold, and the relative error between the leakage gas mass ratio and the gas mass ratio is less than or equal to the preset error threshold;

an alarm suppression sub-module 7628, configured to suppress the total leakage rate quantitative alarm if the total leakage rate is less than the total leakage alarm threshold and the relative error is greater than the error threshold; and

a leakage quantitative alarm submodule 7629, configured to confirm the calculation result as occurrence of leakage and trigger leakage quantitative alarm if the leakage gas quantitative alarm and the total leakage rate quantitative alarm are triggered, or the leakage liquid quantitative alarm and the total leakage rate quantitative alarm are triggered, or the leakage gas quantitative alarm and the leakage liquid quantitative alarm are triggered. Otherwise, the leakage quantitative alarm is suppressed.

Further, when the leakage source location is in the main steam pipeline, the leakage detection module 76 further includes:

a second total condensate flow calculation sub-module 7631, configured to acquire the monitoring value of the condensate flow of each fan, and calculate the total condensate flow according to the monitoring value of the condensate flow of the fan;

a second pit condensate leakage rate calculation sub-module 7632, configured to acquire the level value of the pit condensate, calculate the pit condensate leakage rate per unit time according to the level value, the density of the pit condensate, the structure of the pit where the pit condensate is located and the start and stop time of the drain pump, and correct the pit condensate leakage rate according to the drain pipeline adhesion loss rate to obtain the corrected pit condensate leakage rate;

a second corrected pit ground drain leakage rate calculation sub-module 7633, configured to acquire the liquid level value of the pit round drain if the drain pump of the pit where the pit condensate located fails, and calculate the pit ground drainleakage rate in unit time according to the liquid level value, the average density of the pit ground drain, the structural size of the pit where the ground drain of the pit located, and the start and stop time of the drain pump, and correct the pit ground drain leakage rate of the according to the drain pipeline adhesion and overflow loss rate, to obtain the corrected pit ground drain leakage rate;

a second leakage gas quantitative alarm sub-module 7634, configured to confirm the calculation result as occerrence of leakage and trigger a quantitative leakage gas alarm, if the total condensate flow is greater than or equal to the preset second leakage gas alarm threshold and the pit condensate leakage rate is greater than or equal to the second leakage gas alarm threshold, or the total condensate flow rate is greater than or equal to the second leakage gas alarm threshold and the corrected pit ground drain leakage rate is greater than or equal to the second leakage gas alarm threshold;

a first parameter adjustment module 7635, configured to adjust the drain pipeline adhesion loss rate, so that the absolute difference between the corrected pit condensate leakage rate and the total condensate flow is less than the preset second deviation threshold, if the total condensate flow is less than the second leakage gas alarm threshold and the corrected pit condensate leakage rate is greater than or equal to the preset second leakage liquid alarm threshold, or the total condensate flow is greater than or equal to the second leakage gas alarm threshold and the corrected pit condensate leakage rate is less than the second leakage liquid alarm threshold.

Further, the leakage gas diffusion loss coefficient includes the loss rate during the gas diffusion process and the gas mass ratio at the location of the leakage source, the predictive data includes the automatically calculated unrecognizable leakage rate, and the actual data includes the manually calculated unrecognizable leakage rate. The parameter correction module 70 includes:

a condition calculation sub-module 701, configured to obtain the long-term operation deviation convergence condition according to the automatically calculated unrecognizable leakage rate and the manually calculated unrecognizable leakage rate;

a first judgment sub-module 702, configured to use automatic calculation instead of manual calculation, if the absolute difference between the automatically calculated unrecognizable leakage rate and the manually calculated unrecognizable leakage rate within the preset time range is always smaller than the preset difference, and long-term operation deviation convergence condition is less than or equal to the preset first convergence coefficient;

a second judgment sub-module 703, configured to confirm that the leakage gas diffusion loss coefficient is set reasonably if the relative error of the current total leakage rate with respect to the automatically calculated unrecognizable leakage rate is less than or equal to the preset second convergence coefficient;

a third judgment sub-module 704, configured to increase the loss rate in the gas diffusion process according to the preset step length and modify the gas mass ratio at the leakage source location if the current relative error is greater than the second convergence coefficient and the total leakage rate is greater than the automatically calculated unrecognizable leakage rate;

a fourth judgment sub-module 705, configured to reduce the loss rate in the gas diffusion process according to the preset step length and modify the gas mass ratio at the leakage source location if the current relative error is greater than the second convergence coefficient and the total leakage rate is less than the automatically calculated unrecognizable leakage rate.

In the nuclear power plant leakage monitoring alarm system according to the embodiment of the present invention, the manner in which each module realizes its respective functions can be specifically referred to the description regarding the foregoing method embodiment, and will not be repeated.

One embodiment of the present invention provides a computer-readable storage medium having a computer program stored therein. When the computer program is executed by a processor, the nuclear power plant leakage monitoring alarm method in the foregoing method embodiment is implemented, or when the computer program is executed by the processor, the functions of each module/unit in the nuclear power plant leakage monitoring alarm system in the foregoing system embodiment is implemented. Understandably, the computer-readable storage medium may include: any entity or device capable of carrying computer program code, recording medium, U disk, mobile hard disk, magnetic disk, optical disk, computer memory, read-only memory (ROM), random access memory (RAM), electrical carrier signal and telecommunications signal, etc.

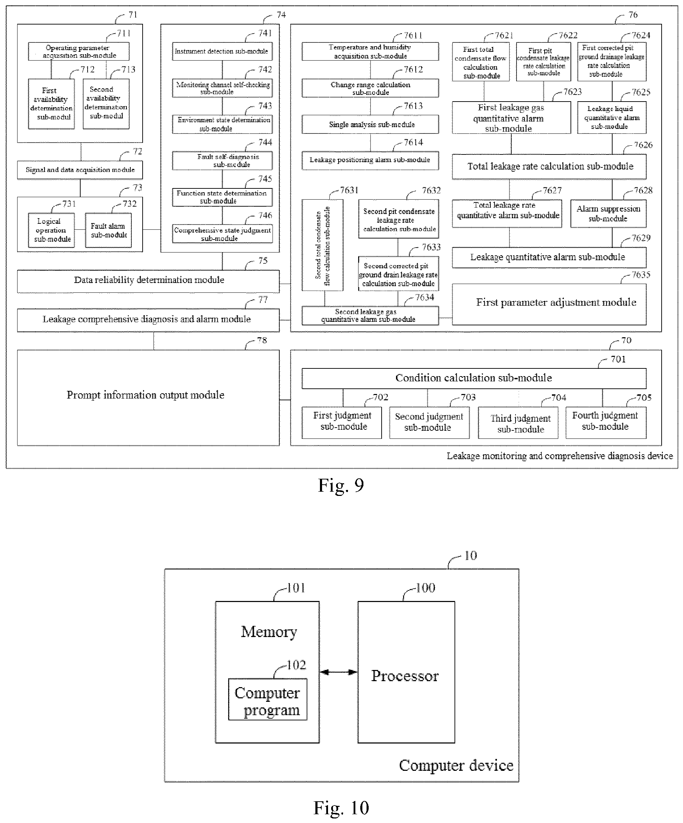

Fig. 10 is a schematic diagram of a computer device according to one embodiment of the present invention. As shown in Fig. 10, the computer device 10 of the present embodiment includes a processor 100, a memory 101, and a computer program 102 stored in the memory 101 and running on the processor 100, such as leakage monitoring and comprehensive diagnosis programs. When the processor 100 executes the computer program 102, the steps in the foregoing method embodiments are implemented, for example, steps S1 to S10 shown in Fig. 1. Or, when the processor 100 executes the computer program 102, the functions of the modules in the foregoing system embodiments, for example the functions of the modules 71 to 79 shown in Fig. 9, are realized.

Exemplarily, the computer program 102 may be divided into one or more units, the one or more units are stored in the memory 101 and executed by the processor 100. One or more units may be a series of computer program instruction segments capable of completing specific functions, and the instruction segments are configured to describe the execution process of the computer program 102 in the computer device 10. For example, the computer program 102 can be divided into a data availability diagnosis module, a signal and data acquisition module, an operating state determination module, a comprehensive state determination module, a data reliability determination module, a leakage detection module, a leakage comprehensive diagnosis and alarm module, a regular leak test module, and a parameter correction module. The specific functions of each module have been shown in the above system embodiment, and will not be repeated.

The computer device 10 may be a terminal device such as a desktop computer, a notebook, a palmtop computer, and a cloud server. The computer device 10 includes, but not limited to, a processor 100 and a memory 101. One skilled in the art can understand that Fig. 10 is only an example of the computer device 10, and does not constitute a limitation on the computer device 10. The computer device 10 may include more or less components than as shown in Fig. 10, or a combination of certain components, or different components. For example, the computer device 10 may also include an input/output device, a network access device, a bus, etc.

The processor 100 may be a central processing unit (CPU), other general purpose processors, digital signal processors (DSP), application specific integrated circuits (ASIC), ready-made field-programmable gate array (FPGA) or other programmable logic devices, discrete gates or transistor logic devices, discrete hardware assemblies, etc. The general purpose processor may be a microprocessor or any conventional processor.

The memory 101 may be an internal storage unit of the computer device 10, such as a hard disk or a memory of the computer device 10. The memory 101 may also be an external storage device of the computer device 10, such as a plug-in hard disk equipped on the computer device 10, a smart media card (SMC), a secure digital (SD) card, and a flash memory card (flash card) and so on. Further, the memory 101 may also include an internal storage unit of the computer device 10 and an external storage device. The memory 101 is configured to store computer programs and other programs and data required by the computer device 10. The memory 101 can also be configured to temporarily store data that has been output or to be output.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe example embodiments, it should be appreciated that alternative embodiments without departing from the scope of the appended claims. Although specific terms are employed herein, they are used in a generic and descriptive sense only and not for purposes of limitation.

## Claims

1. A nuclear power plant leakage monitoring alarm method, **characterized in that** the nuclear power plant leakage monitoring alarm method comprises:

   acquiring a unit operating condition signal, and determining availability of leakage monitoring data according to the unit operating condition signal;
   acquiring process system state signals and leakage monitoring instrument data if the leakage monitoring data is in an available state;
   judging whether the process system has a fault according to the process system state signal, and obtaining operating state of the process system;
   judging whether leakage monitoring instrument and the system has a fault according to the leakage monitoring instrument data, monitoring channel self-check and system fault self-diagnosis, and obtaining comprehensive state of the leakage monitoring instrument and the system;
   determine reliability of the leakage monitoring data according to the operating state and the comprehensive state;
   implementing leakage source positioning analysis to determine the location of the leakage source if the leakage monitoring data is reliable, and implementing a leakage rate quantitative calculation according to the location of the leakage source; and
   triggering a leakage alarm if analysis result of the leakage source positioning analysis and calculation result of the leakage rate quantitative calculation indicate occurrence of the leakage and leakage response characteristic is satisfied.

2. The nuclear power plant leakage monitoring alarm method according to claim 1, **characterized in that**, when the leakage alarm is triggered, the leakage monitoring alarm method further comprises:

   outputting leakage alarm prompt information including leakage rate change curve and leakage source location information, so that an operator can implement periodic leakage rate tests based on the leakage alarm prompt information;
   after the operator implements a periodic leakage rate test based on the leakage alarm prompt information, calculating a predictive data of the periodic leakage rate test if the operator initiates the periodic leakage rate test is detected, and obtaining an actual data of the periodic leakage rate test manually calculated by the operator after the periodic leakage rate test is finished; and
   correcting a leakage gas diffusion loss coefficient by comparing the predictive data with the actual data.

3. The nuclear power plant leakage monitoring alarm method according to claim 1 or 2, **characterized in that** acquiring a unit operating condition signal and determining availability of leakage monitoring data according to the unit operating condition signal comprising:

   acquiring operating parameters of nuclear power plant reactor, and determining the unit operating condition signal according to the operating parameters;
confirming the leakage monitoring data in an unavailable state if the unit operating condition signal does not meet requirements of a preset operating condition; and
confirming the leakage monitoring data in an available state if the unit operating condition signal meets the requirements of the preset operating condition.

4. The nuclear power plant leakage monitoring alarm method according to claim 1 or 2, **characterized in that** acquiring process system state signals comprises:

comparing air volume, temperature and pressure of a ventilation system in each process system with a preset air volume threshold, a preset temperature threshold and a preset pressure threshold, and determining each process system state signal according to comparison result;
judging whether the process system has a fault according to the process system state signal, and obtaining operating state of the process system comprises:

implementing a logical AND operation on each process system state signal, and determining operating state of the process system according to calculation result; and
triggering a process system fault alarm if the operating state is faulty.

5. The nuclear power plant leakage monitoring alarm method according to claim 1 or 2, **characterized in that** the leakage monitoring instrument data comprises an in-situ leakage monitoring instrument value and a reference point leakage monitoring instrument value, and judging whether the leakage monitoring instrument and the system are faulty according to the leakage monitoring instrument data, monitoring channel self-check and system fault self-diagnosis, and obtaining comprehensive state of the leakage monitoring instrument and the system comprises:

judging whether the instrument is faulty and obtaining instrument state according to the in-situ leakage monitoring instrument value and the reference point leakage monitoring instrument value;
receiving a preset fixed mode signal transmitted by a preset signal transmitter at a predetermined first time interval, detecting matching degree between the received fixed mode signal and the preset fixed mode signal, determining whether the signal transmission in the monitoring channel is normal according to the matching degree, and obtaining the signal transmission state;
acquiring server operating environment parameters, and determining operating environment state according to the server operating environment parameters;
implementing leakage source positioning analysis according to a preset parameters at a predetermined second time interval and obtaining system fault self-diagnosis results;
determining the server function state according to the operating environment state and the system fault self-diagnosis result; and
determining comprehensive state of the leakage monitoring instrument and the system according to the instrument state, the signal transmission state and the server function state.

6. The nuclear power plant leakage monitoring alarm method according to claim 1 or 2, **characterized in that** implementing a leakage source positioning analysis to determine the location of the leakage source comprises:

acquiring temperature and humidity monitoring values collected by temperature and humidity sensors, wherein the temperature and humidity monitoring value comprises a temperature monitoring value and a humidity monitoring value, and the temperature and humidity sensors are installed in a preset position of a pipeline, equipment compartment or ventilation line in advance;
calculating a variation range of each temperature monitoring value and a variation range of each humidity monitoring values if each temperature monitoring value is greater than a preset environmental background value, and each humidity monitoring value is greater than a preset environmental background value;
confirming a single analysis result of the leakage source positioning analysis corresponding to the temperature and humidity sensor as occurrence of leakage, if the variation range of the temperature monitoring value of the temperature and humidity sensor meets the preset temperature alarm threshold range, and the variation range of the humidity monitoring value of the temperature and humidity sensor meets the preset humidity alarm threshold range; and
confirming the analysis result of the leakage source positioning analysis as occurrence of leakage, obtaining the location of the leakage source and the gas mass ratio, and triggering the leakage location alarm, if the single analysis result of the leakage source positioning analysis of the temperature and humidity sensor with same location monitoring function indicates occurrence of leakage; otherwise, confirming the analysis result as non-leakage or abnormal instrument,
suppressing the leakage location alarm, adjusting temperature alarm threshold range according to the temperature monitoring value curve, and adjusting the humidity alarm threshold range according to the humidity monitoring value curve.

7. The nuclear power plant leakage monitoring alarm method according to claim 6, **characterized in that** the leakage source location comprises a reactor coolant pressure boundary and a main steam pipeline, wherein the leakage generated at the reactor coolant pressure boundary comprises leakage gas and leakage liquid, the leakage generated at the main steam pipeline location comprises leakage gas, the monitoring data of the leakage gas comprises a monitoring value of fan condensate flow rate, a pit condensate leakage rate, and the monitoring data of the leakage liquid comprises pit ground drainage leakage rate.

8. The nuclear power plant leakage monitoring alarm method according to claim 7, **characterized in that** when the leakage source location is the reactor coolant pressure boundary, the leakage rate quantitative calculation according to the leakage source location comprises:

acquiring a monitoring value of each fan condensate flow rate, and calculating total condensate flow rate according to the monitoring value of the fan condensate flow rate;
obtaining a level value of the pit condensate, and calculating leakage rate of the pit condensate in unit time based on the level value, the density of the pit condensate, structural size of the pit where the pit condensate located, and start and stop time of a drain pump, correcting the leakage rate of the pit condensate according to drain pipeline adhesion loss rate, and obtaining a corrected pit condensate leakage rate;
determining occurrence of a gas leakage and triggerring a gas leakage quantitative alarm if the total condensate flow is greater than or equal to a preset first leakage gas alarm threshold, and the corrected pit condensate leakage rate is greater than or equal to the first leakage gas alarm threshold;
otherwise, adjusting the drain pipeline adhesion loss rate, such that absolute difference between the corrected pit condensate leakage rate and the total condensate flow is less than a preset first deviation threshold if the total condensate flow is greater than or equal to the first leakage gas alarm threshold, or the corrected pit condensate leakage rate is greater than or equal to the first leakage gas alarm threshold;
acquiring a liquid level value of pit ground drain, calculating pit ground drain leakage rate in a time unit based on the level value, average density of the pit ground drain, structural size of the pit where the pit ground drain located, and a start and stop time of the drain pump, and correctting the pit ground drain leakage rate according to the ground adhesion loss rate to obtain corrected pit ground drain leakage rate;
determining occurrence of liquid leakage and triggering a quantitative leakage liquid alarm, if the corrected pit ground drain leakage rate is greater than or equal to the preset first leakage liquid alarm threshold;
taking the sum of the corrected pit condensate leakage rate and the corrected pit ground drain leakage rate as the total leakage rate, and correcting the ratio of the pit condensate leakage rate to the total leakage rate as the leakage gas mass ratio, if the leakage gas quantitative alarm is triggered or the leakage liquid quantitative alarm is triggered;
triggering the total leakage rate quantitative alarm, if the total leakage rate is greater than or equal to the preset total leakage alarm threshold, and the relative error between the leakage gas mass ratio and the gas mass ratio is less than or equal to a preset error threshold;
suppressing the total leakage rate quantitative alarm, if the total leakage rate is less than the total leakage alarm threshold, and the relative error is greater than the error threshold; and
confirming the calculation result as occurrence of leakage and triggering the leakage quantitative alarm, if the leakage gas quantitative alarm and the total leakage rate quantitative alarm are triggered, or the leakage liquid quantitative alarm and the total leakage rate quantitative alarm are triggered, or the leakage gas quantitative alarm and the leakage liquid quantitative alarms are triggered, otherwise, suppressing the leakage quantitative alarm.

9. The nuclear power plant leakage monitoring alarm method according to claim 7, **characterized in that** when the leakage source location is the main steam pipeline, the leakage rate quantitative calculation according to the leakage source location further comprises:

acquiring a monitoring value of each fan condensate flow rate, and calculating the total condensate flow rate according to the monitoring value of the condensate flow rate of the fan;
acquiring the pit condensate level value, and calculating the pit condensate leakage rate in unit time based on the level value, the density of the pit condensate, the structural size of the pit where the pit condensate located and start and stop time of the drain pump, and correcting the pit condensate leakage rate according to the adhesion loss rate of the drain pipeline to obtain corrected pit condensate leakage rate;

obtaining the level value of the pit ground drain if the drain pump of the pit where the pit condensate located fails, calculating the pit ground drain leakage rate in unit time according to the level value, the average density of the pit ground drain, the structural size of the pit where the ground drain located and the start and stop time of the drain pump, correcting the pit ground drain leakage rate based on the drain pipeline adhesion and overflow loss rate, and obtaining corrected pit ground drain leakage rate;

confirming the calculation result as occurrence of leakage, and triggerring the leakage gas quantitative alarm, if the total condensate flow is greater than or equal to a preset second leakage gas alarm threshold and the corrected pit condensate leakage rate is greater than or equal to the second leakage gas alarm threshold, or the total condensate flow is greater than or equal to the second leakage gas alarm threshold and the corrected pit ground drain leakage rate is greater than or

equal to the second leaked gas alarm threshold value; and

adjusting the drain pipeline adhesion loss rate so that the absolute difference between the coeected pit condensate leakage rate and the total condensate flow is less than the preset second deviation threshold, if the total condensate flow is less than the second leakage gas alarm threshold and the corrected pit condensate leakage rate is greater than or equal to the preset second leakage liquid alarm threshold, or the total condensate flow is greater than or equal to the second leakage gas alarm threshold and the corrected pit condensate leakage rate is less than the second leakage liquid alarm threshold.

**10.** The nuclear power plant leakage monitoring alarm method according to claim 2, **characterized in that** the leakage gas diffusion loss coefficient comprises loss rate during the gas diffusion process and the gas mass ratio at the leakage source location, the predictive data comprises automatically calculated unrecognizable leakage rate, the actual data comprises a manually calculated unrecognizable leakage rate, and correcting the leakage gas diffusion loss coefficient by comparing the predictive data with the actual data comprises:

obtaining a long-term operation deviation convergence condition according to the automatically calculated unrecognizable leakage rate and the manually calculated unidentifiable leakage rate;

using automatic calculation instead of manual calculation if the absolute difference between the automatically calculated unrecognizable leakage rate and the manually calculated unrecognizable leakage rate within a preset time range is always less than the preset difference, and the long-term operation deviation convergence condition is less than or equal to a preset first convergence coefficient;

confirming the leakage gas diffusion loss coefficient as being set reasonably if the relative error of the current total leakage rate with respect to the automatically calculated unrecognizable leakage rate is less than or equal to the preset second convergence coefficient;

increasing the loss rate in the gas diffusion process according to the preset step size, and correcting the gas mass ratio at the leakage source location if the current relative error is greater than the second convergence coefficient, and the total leakage rate is greater than the automatically calculated unrecognizable leakage rate; and

reducing the loss rate in the gas diffusion process according to a preset step size, and correcting the gas mass ratio at the leakage source location, if the current relative error is greater than the second convergence coefficient, and the total leakage rate is less than the automatically calculated unrecognizable leakage rate.

**11.** A nuclear power plant leakage monitoring alarm system, **characterized in that** the nuclear power plant leakage monitoring alarm system comprises:

a data availability diagnosis module (71), configured to acquire a unit operating condition signal, and determine availability of leakage monitoring data according to the unit operating condition signal;

a signal and data acquisition module (72), configured to acquire a process system state signal and leakage monitoring instrument data if the leakage monitoring data is in an available state;

an operating state determination module (73), configured to determine whether the process system has a fault according to the process system state signal, and obtain operating state of the process system;

a comprehensive state determination module (74), configured to determine whether the leakage monitoring instrument and system has a fault according to the leakage monitoring instrument data, monitoring channel self-check and system fault self-diagnosis and obtain comprehensive state of the leakage monitoring instrument and system;

a data reliability determination module (75), configured to determine reliability of the leakage monitoring data according to the operating state and the comprehensive state;

a leakage detection module (76), configured to implement leakage source positioning analysis if the leakage detection data is reliable, to determine the leakage source location and implement leakage rate quantitative calculation according to the leakage source location; and

a leakage comprehensive diagnosis and alarm module (77), configured to trigger a leakage alarm if the analysis result of the leakage source positioning analysis and the calculation result of the leakage rate quantitative calculation indicate occurrence of leakage and the leakage response characteristics are met.

12. The nuclear power plant leakage monitoring alarm system according to claim 11, **characterized in that** the nuclear power plant leakage monitoring alarm system further comprises:

a prompt information output module (78), configured to output the leakage alarm prompt information including the leakage rate change curve and the information of the leakage source location, so that the operator can implement periodic leakage rate tests based on the leakage alarm prompt information;

a periodic leakage test modul (79), configure to calculate the predictive data of the periodic leakage rate test if the operator initiates the periodic leakage rate test is detected, and obtain the actual data of the periodic test of the leakage rate manually calculated by the operator after the periodic leakage rate test is finished; and

a parameter correction module (70), configured to correct the leakage gas diffusion loss coefficient by comparing the predictive data with the actual data.

Acquiring a unit operating condition signal, and determining leakage monitoring data availability according to the unit operating condition signal — S1

Acquiring process system state signal and leakage monitoring instrument data if the leakage monitoring data is in an available state — S2

S3

Judging whether the process system is faulty according to the process system state signal, and obtaining the operating state of the process system

Judging whether the leakage monitoring instrument and system are faulty according to the leakage monitoring instrument data, monitoring channel self-check and system fault self-diagnosis, and obtaining the comprehensive state of the leakage monitoring instrument and the system — S4

Determining the reliability of the leakage monitoring data according to the operating state of the process system and the comprehensive state of the leakage monitoring instrument and the system — S5

If the leakage monitoring data is reliable, a leakage source positioning analysis is carried out to determine the location of the leakage source, and a leakage rate quantitative calculation is performed based on the leakage source location — S6

If the analysis results of the leakage source positioning analysis and the calculation result of the leakage rate quantitative calculation both indicate occurrence of leakeage and the leakage response characteristics are met, a leakage alarm will be triggered — S7

Fig. 1

Performing a logical AND operation on the state signal of each process system, and determining the operating state of the process system according to the calculation result — S31

If the operating state of the process system is faulty, a process system fault alarm is triggered — S32

Fig. 2

24

Obtaining the long-term operation deviation convergence condition in accordance with the automatically calculated unrecognizable leakage rate and the manually calculated unrecognizable leakage rate — S101

If the absolute difference between the automatically calculated unrecognizable leakage rate and the manually calculated unrecognizable leakage rate within a preset time range is always less than a preset difference, and the long-term operation deviation convergence condition is less than or equal to the preset first convergence coefficient, automatic calculation is used instead of manual calculation — S102

If the relative error of the current total leakage rate with respect to the automatically calculated unrecognizable leakage rate is less than or equal to a preset second convergence coefficient, the leakage gas diffusion loss coefficient is confirmed as being set reasonably — S103

If the current relative error is greater than the second convergence coefficient, and the total leakage rate is greater than the automatically calculated unrecognizable leakage rate, the loss rate in the gas diffusion process is increased according to the preset step length, and the gas mass ratio at the leakage source location is corrected — S104

If the current relative error is greater than the second convergence coefficient, and the total leakage rate is less than the automatically calculated unrecognizable leakage rate, the loss rate in the gas diffusion process is reduced according to the preset step length, and the gas mass ratio at the leakage source location is corrected — S105

Fig. 3

Acquiring the operating parameters of the nuclear power plant reactor, and determining the unit operating condition signal based on the operating parameters — S11

S12

If the unit operating condition signal does not meet the preset operating condition requirements, the availability of leakage monitoring data is confirmed as unavailable

If the unit operating condition signal meets the preset operating condition requirements, the availability of the leakage monitoring data is confirmed as in an available state — S13

Fig. 4

Judging whether the instrument is faulty according to the in-situ leakage monitoring instrument value and the reference point leakage monitoring instrument value, and obtaining the instrument state — S41

Receiving a preset fixed mode signal transmitted by a preset signal transmitter at a predetermined first time interval, detecting the matching degree between the received fixed mode signal and the preset fixed mode signal, and determining whether the signal transmission in the monitoring channel is normal according to the matching degree, and obtaining the signal transmission state — S42

Obtaining a server operating environment parameter, and determining the operating environment state according to the server operating environment parameter — S43

Performing leakage source positioning analysis according to the preset parameters at the predetermined second time interval, to obtain system fault self-diagnosis results — S44

Determining the server function state according to the server operating environment state and the system fault self-diagnosis result — S45

Determining the comprehensive state of the leakage monitoring instrument and the system according to the instrument state, signal transmission state and server function state — S46

Fig. 5

Obtaining a temperature and humidity monitoring value collected by a temperature and humidity sensor, wherein the temperature and humidity monitoring value includes a temperature monitoring value and a humidity monitoring value, and the temperature and humidity sensor is installed in a preset position of a pipeline, equipment compartment or ventilation line in advance — S611

If each temperature monitoring value is greater than the preset environmental background value, and each humidity monitoring value is greater than the preset environmental background value, the variation range of each temperature monitoring value and the variation range of each humidity monitoring value are calculated — S612

If the variation range of the temperature monitoring value of the temperature and humidity sensor meets the preset temperature alarm threshold range, and the variation range of the humidity monitoring value of the temperature and humidity sensor meets the preset humidity alarm threshold range, the single analysis result of leakage source positioning analysis corresponding to the temperature and humidity sensor is confirmed as occurrence of leakage — S613

If the single analysis result of the leakage source positioning analysis of the temperature and humidity sensor with the same location monitoring function is confirmed as occurrence of leakage, the analysis result of the leakage source positioning analysis is confirmed as occurrence of leakiage, and the leakage source location and the gas mass ratio are obtained, and the leakage location alarm is triggered. Otherwise, the analysis result of the leakage source positioning analysis is confirmed as no-leakage or the instrument is confirmed as abnormal, the leakage source location alarm is suppressed, and the temperature alarm threshold range is adjusted according to the curve of the temperature monitoring value, and the humidity alarm threshold range is adjusted according to the curve of the humidity monitoring value — S614

Fig. 6

S621

Obtaining the monitoring value of the condensate flow of each fan, and calculating the total condensate flow according to the monitoring value of the condensate flow of the fan

S622

Obtaining the level value of the pit condensate, and calculating the pit condensate leakage rate in unit time based on the level value, the density of the pit condensate, the structural size of the pit where the pit condensate located, and the start and stop time of the drain pump, and correcting the pit condensate leakage rate according to the adhesion loss rate of the drain pipeline to obtain the corrected pit condensate leakage rate

S624

Obtaining the liquid level value of the pit ground drain, and calculating the pit ground drain leakage rate in unit time according to the level value, the average density of the pit ground drain, the structural size of the pit where the pit ground drain is located, and the start and stop time of the drain pump. The pit ground drain leakage rate is corrected according to the ground adhesion loss rate, to obtain the corrected pit ground drain leakage rate

S623

If the total condensate flow is greater than or equal to the preset first gas leakage alarm threshold, and the corrected pit condensate leakage rate is greater than or equal to the first gas leakage alarm threshold, a gas leakage occurrence is determined and a quantitative leakage gas alarm is triggered. Otherwise, if the total condensate flow is greater than or equal to the first leakage gas alarm threshold, or the corrected pit condensate leakage rate is greater than or equal to the first leakage gas alarm threshold, the drain pipeline adhesion loss rate is adjusted, so that the absolute difference between the corrected pit condensate leakage rate and the total condensate flow is less than the preset first deviation threshold

S625

If the corrected pit ground drain leakage rate is greater than or equal to the preset first leakage liquid alarm threshold, it is determined that liquid leakage has occurred, and a quantitative leakage liquid alarm is triggered

S626

If the leakage gas quantitative alarm is triggered, or the leakage liquid quantitative alarm is triggered, the sum of the corrected pit condensate leakage rate and the corrected pit ground drain leakage rate will be used as the total leakage rate, and the ratio of the corrected pit condensate leakage rate to the total leakage rate is taken as the leakage gas mass ratio

S627

If the total leakage rate is greater than or equal to the preset total leakage alarm threshold, and the relative error between the leakage gas mass ratio and the gas mass ratio is less than or equal to the preset error threshold, the total leakage rate quantitative alarm is triggered

S628

If the total leakage rate is less than the preset total leakage alarm threshold, and the relative error between the leakage gas mass ratio and the gas mass ratio is greater than the preset error threshold, the total leakage rate quantitative alarm is suppressed

S629

If the leakage gas quantitative alarm and the total leakage rate quantitative alarm are triggered, or the leakage liquid quantitative alarm and the total leakage rate quantitative alarm are both triggered, or the leakage gas quantitative alarm and the leakage liquid quantitative alarm are both triggered, the calculation result of the leakage rate quantitative calculation is confirmed as occurrence of leakage, and the leakage quantitative alarm is triggered. Otherwise the leakage quantitative alarm is suppressed

Fig. 7

S631

Obtaining the monitoring value of the condensate flow rate of each fan, and calculating the total condensate flow rate according to the monitoring value of the condensate flow rate of the fan.

Obtaining the liquid level value of the pit condensate, and calculating the pit condensate leakage rate in unit time based on the level value, the density of the pit condensate, the structural size of the pit where the pit condensate located, and the start and stop time of the drain pump. The pit condensate leakage rate is corrected according to the adhesion loss rate of the drain pipeline to obtain the corrected pit condensate leakage rate — S632

If the drain pump of the pit where the pit condensate located fails, the liquid level value of the pit ground drain is obtained. The pit ground drain leakage rate in unit time is calculated according to the liquid level value, the density of the condensate, the structure size of the pit where the pit ground drain located, and the start and stop time of the drain pump of the pit where the pit ground drain located. The pit ground drain leakage rate is corrected according to the drain pipeline adhesion and overflow loss rate, to obtain the corrected pit ground drain leakage rate. — S633

If the total condensate flow is greater than or equal to the preset second gas leakage alarm threshold and the corrected pit condensate leakage rate is greater than or equal to the second gas leakage alarm threshold, or the total condensate flow is greater than or equal to the second gas leakage alarm threshold and the corrected pit ground drain leakage rate is greater than or equal to the second leakage gas alarm threshold, confirming the calculation result of the quantitative calculation of the leakage rate as occurrence of leakage, and triggering a quantitative leakage gas alarm — S634

If the total condensate flow is less than the second leakage gas alarm threshold and the corrected pit condensate leakage rate is greater than or equal to the preset second leakage liquid alarm threshold, or the total condensate flow is greater than or equal to the second leakage gas alarm threshold and the corrected pit condensate leakage rate is less than the second leakage liquid alarm threshold, adjusting the drain pipeline adhesion loss rate, so that the absolute difference between the corrected pit condensate leakage rate and the total condensate flow is less than the preset second deviation threshold — S635

Fig. 8

Fig. 9

Fig. 10

<center>**INTERNATIONAL SEARCH REPORT**</center>

| International application No. |
| --- |
| **PCT/CN2018/120393** |

**A. CLASSIFICATION OF SUBJECT MATTER**

G21C 17/10(2006.01)i; G21C 17/00(2006.01)i; G21D 3/06(2006.01)i

According to International Patent Classification (IPC) or to both national classification and IPC

**B. FIELDS SEARCHED**

Minimum documentation searched (classification system followed by classification symbols)

G21C; G21D

Documentation searched other than minimum documentation to the extent that such documents are included in the fields searched

Electronic data base consulted during the international search (name of data base and, where practicable, search terms used)

CNABS; CNTXT; VEN; CNKI; USTXT; EPTXT; WOTXT: 田亚杰, 凌君, 温小梅, 周新建, 工艺系统, 工况, 泄漏, 监测, 仪表, 核电站, operating condition, monitoring, leakage, nuclear power plant

**C. DOCUMENTS CONSIDERED TO BE RELEVANT**

| Category* | Citation of document, with indication, where appropriate, of the relevant passages | Relevant to claim No. |
| --- | --- | --- |
| A | CN 108231227 A (GUANGDONG NUCLEAR POWER JOINT VENTURE et al.) 29 June 2018 (2018-06-29)<br>claims 1-10, and figures 1-7 | 1-12 |
| A | CN 105223932 A (CHINA NUCLEAR POWER ENGINEERING CO., LTD. et al.) 06 January 2016 (2016-01-06)<br>entire document | 1-12 |
| A | CN 102426866 A (CHINA NUCLEAR POWER ENGINEERING CO., LTD. et al.) 25 April 2012 (2012-04-25)<br>entire document | 1-12 |
| A | CN 101706039 A (NUCLEAR POWER INSTITUTE OF CHINA) 12 May 2010 (2010-05-12)<br>entire document | 1-12 |
| A | CN 103400612 A (CHINA NUCLEAR POWER ENGINEERING CO., LTD. et al.) 20 November 2013 (2013-11-20)<br>entire document | 1-12 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **30 July 2019** | **02 September 2019** |

| Name and mailing address of the ISA/CN | Authorized officer |
| --- | --- |
| **National Intellectual Property Administration, PRC (ISA/CN)**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2018/120393**

| Patent document cited in search report | | | Publication date (day/month/year) | Patent family member(s) | | | Publication date (day/month/year) |
|---|---|---|---|---|---|---|---|
| CN | 108231227 | A | 29 June 2018 | None | | | |
| CN | 105223932 | A | 06 January 2016 | CN | 105223932 | B | 05 March 2019 |
| CN | 102426866 | A | 25 April 2012 | CN | 102426866 | B | 26 March 2014 |
| CN | 101706039 | A | 12 May 2010 | CN | 101706039 | B | 19 September 2012 |
| CN | 103400612 | A | 20 November 2013 | CN | 103400612 | B | 13 January 2016 |

Form PCT/ISA/210 (patent family annex) (January 2015)